# EUROPEAN PATENT APPLICATION

(11) **EP 3 817 322 A1**
(43) Date of publication of application: **05.05.2021**
(21) Application number: 19844644.5
(22) Date of filing: 30.07.2019
(51) Int. Cl.: H04L 29/06

(54) **METHOD FOR UPGRADING SERVICE APPLICATION RANGE OF ELECTRONIC IDENTITY CARD, AND TERMINAL DEVICE**

(30) Priority: 03.08.2018 CN 201810876556
(71) Applicant: HUAWEI TECHNOLOGIES CO., LTD., Shenzhen, Guangdong 518129 (CN)
(72) Inventor: ZHAO, Xiaona, Shenzhen, Guangdong 518129 (CN)
(74) Representative: Gill Jennings & Every LLP
(86) International application number: PCT/CN2019/098318
(87) International publication number: WO 2020/024929

(57) **Abstract**

This application provides a method for upgrading a service application scope of an electronic identification card, to upgrade a service application scope of an electronic identification card with relatively low costs. The method includes: receiving, by a terminal device, a trigger instruction, where the trigger instruction is used to request to upgrade a service application scope of an electronic identification card of a user; determining, by the terminal device, that a trusted security platform is provided locally, and determining that the trusted security platform stores certification information of an identity authentication server; obtaining, by the terminal device from the identity authentication server, permission to upgrade the service application scope of the electronic identification card based on the trusted security platform; and generating, by the terminal device, upgrade information required to upgrade the service application scope of the electronic identification card, and sending the upgrade information to the identity authentication server, so that the identity authentication server upgrades the service application scope of the electronic identification card based on the upgrade information.

## Description

This application claims priority to Chinese Patent Application No. 201810876556.5, filed with the China National Intellectual Property Administration on August 3, 2018 and entitled "METHOD FOR UPGRADING SERVICE APPLICATION SCOPE OF ELECTRONIC IDENTIFICATION CARD AND TERMINAL DEVICE", which is incorporated herein by reference in its entirety.

### TECHNICAL FIELD

This application relates to the field of terminal devices, and specifically, to a method and a terminal device for upgrading an application scope of an electronic identification card, and a method and a terminal device for applying for an electronic identification card.

### BACKGROUND

In recent years, online real-name authentication on users becomes increasingly popular and indispensable, and privacy protection for user identity information has been a concern. An online identification card copy issuance system is launched on a cyber trusted identity (citizen trusted identity, CTID) authentication platform set up by the first Research Institute of the Ministry of Public Security. A unique online identification card copy, which may also be referred to as an electronic identification card, can be generated online for each user based on the online identification card copy issuance system. The electronic identification card does not contain any privacy information and is uniquely corresponding to a physical identification card. In addition, the Ministry of Public Security established a multi-factor trusted identity authentication system with a plurality of authentication modes, to help service platforms (for example, service providers of electronic commerce, finance, and electronic government) complete real identity authentication on "real name + real person + real identification card" of users by using electronic identification cards of the users with reference to information such as face images and fingerprints. For example, authentication may be performed on identities of users in service scenarios such as hotel check-in and ticket purchase by using electronic identification cards.

However, because use of electronic identification cards is at commence and research stages, a service application scope of an electronic identification card is still restricted. For example, at present, an electronic identification card is applicable only to real-name authentication in simple scenarios such as social interaction between users, registration at a cyber bar, hotel check-in, and ticket purchase. If a service application scope of an electronic identification card needs to be broadened, for example, application of the electronic identification card to government affairs handling and business registration, currently, one of implementations is: The Ministry of Public Security deploys trusted handling terminals at fixed sites, and a user upgrades a service application scope of an electronic identification card on a trusted handling terminal. However, deploying trusted handling terminals at fixed sites costs a lot, and users use the trusted handling terminals inconveniently.

### SUMMARY

This application provides a method and a terminal device for upgrading a service application scope of an electronic identification card, and a method and a terminal device for applying for an electronic identification card. In this way, an increasingly mature trusted security platform on a terminal device can be used, to upgrade a service application scope of an electronic identification card with relatively low costs, or directly apply for an electronic identification card with a relatively broad service application scope for a user.

According to a first aspect, a method for upgrading a service application scope of an electronic identification card is provided. The method includes: receiving, by a terminal device, a trigger instruction, where the trigger instruction is used to request to upgrade a service application scope of an electronic identification card of a user; determining, by the terminal device, that the terminal device is provided with a trusted security platform, and determining that the trusted security platform stores certification information of an identity authentication server; obtaining, by the terminal device from the identity authentication server, permission to upgrade the service application scope of the electronic identification card based on the trusted security platform; and generating, by the terminal device, upgrade information required to upgrade the service application scope of the electronic identification card, and sending the upgrade information to the identity authentication server, so that the identity authentication server upgrades the service application scope of the electronic identification card based on the upgrade information.

According to the solution of this application, the terminal device applies to the identity authentication server for the permission to upgrade the service application scope of the electronic identification card of the user based on the trusted security platform provided on the terminal device, to upgrade the service application scope of the electronic identification card of the user based on the trusted security platform. In one aspect, this can save costs of specially deploying a trusted handling terminal for upgrading the service application scope of the electronic identification card of the user, and reduce difficulty in popularizing electronic identification cards. In another aspect, the user no longer needs to go to a fixed site to upgrade the service application scope of the electronic identification card by using the deployed trusted handling terminal, but completes upgrading of the service application scope of the electronic identification card of the user by operating the terminal device (for example, a mobile phone) instead. This can be convenient for the user.

With reference to the first aspect, in some implementations of the first aspect, before the determining, by the terminal device, that the trusted security platform stores certification information of an identity authentication server, the method further includes: determining, by the terminal device, that the trusted security platform has an electronic identification card application; or when determining that the trusted security platform has no electronic identification card application, downloading and installing, by the terminal device, an electronic identification card application to the trusted security platform.

With reference to the first aspect, in some implementations of the first aspect, the trusted security platform is a trusted execution environment TEE, and the electronic identification card application is a trusted application TA in the TEE; or the trusted security platform is a secure element SE, and the electronic identification card application is a security application in the SE.

With reference to the first aspect, in some implementations of the first aspect, the upgrade information includes face image information and physical identification card information of the user, and the generating, by the terminal device, upgrade information required to upgrade the service application scope of the electronic identification card, and sending the upgrade information to the identity authentication server includes: generating, by the terminal device, the upgrade information through a client application CA in an REE, and sending the upgrade information to the identity authentication server through the CA, where at least one piece of the upgrade information is obtained by the CA from the electronic identification card application; or requesting, by the terminal device through the CA, the electronic identification card application to generate the upgrade information, and sending, by the electronic identification card application, the upgrade information to the identity authentication server.

With reference to the first aspect, in some implementations of the first aspect, the upgrade information further includes signature information, and the signature information is information obtained by the electronic identification card application by performing signing processing on at least one of the face image information and the physical identification card information by using a key of the trusted security platform.

With reference to the first aspect, in some implementations of the first aspect, the upgrade information further includes electronic identification card information, or the upgrade information further includes the electronic identification card information and identification information of the service application scope corresponding to the electronic identification card information.

With reference to the first aspect, in some implementations of the first aspect, the upgrade information is information obtained after encryption processing is performed by using a key of the identity authentication server.

With reference to the first aspect, in some implementations of the first aspect, the determining, by the terminal device, that the trusted security platform stores certification information of an identity authentication server includes: sending, by the terminal device, a query command to the trusted security platform through the CA in the REE, where the query command is used to request to query whether the trusted security platform stores the certification information of the identity authentication server, and the query command carries information that can represent an identity of the identity authentication server; and receiving, by the terminal device, a query success response from the trusted security platform through the CA, where the query success response is used to indicate that the trusted security platform stores the certification information of the identity authentication server.

With reference to the first aspect, in some implementations of the first aspect, the query success response carries information that can indicate a certificate of the trusted security platform, and the obtaining, by the terminal device from the identity authentication server, permission to upgrade the service application scope of the electronic identification card based on the trusted security platform includes: sending, by the terminal device, a local upgrade authorization request to the identity authentication server, where the local upgrade authorization request carries the information that can indicate the certificate of the trusted security platform; and receiving, by the terminal device, an authorization response message returned by the identity authentication server, where the authorization response message is used to indicate that the identity authentication server allows upgrading the service application scope of the electronic identification card based on the trusted security platform.

With reference to the first aspect, in some implementations of the first aspect, the sending, by the terminal device, a local upgrade authorization request to the identity authentication server includes: sending, by the terminal device, the local upgrade authorization request to the identity authentication server through the CA, and the receiving, by the terminal device, an authorization response message returned by the identity authentication server includes: receiving, by the terminal device through the CA, the authorization response message returned by the identity authentication server; or the sending, by the terminal device, a local upgrade authorization request to the identity authentication server includes: sending, by the terminal device, the local upgrade authorization request to the identity authentication server through the electronic identification card application, and the receiving, by the terminal device, an authorization response message returned by the identity authentication server includes: receiving, by the terminal device, the authorization response message from the identity authentication server through the electronic identification card application.

With reference to the first aspect, in some implementations of the first aspect, the local upgrade authorization request further carries a random number and a signature of the random number, where the signature of the random number is obtained by the trusted security platform by performing signature calculation on the random number by using the key of the trusted security platform; and the random number is generated by the trusted security platform, or is sent by the CA to the trusted security platform by using the query command.

With reference to the first aspect, in some implementations of the first aspect, at least one of the information that can indicate the certificate of the trusted security platform, the random number, and the signature of the random number is information obtained after encryption processing is performed by using the key of the identity authentication server.

According to a second aspect, a method for applying for an electronic identification card is provided. The method includes: receiving, by a terminal device, a trigger instruction, where the trigger instruction is used to request to apply for an electronic identification card with a target service application scope for a user, and the service application scope is used to specify a service to which the electronic identification card can be applicable; determining, by the terminal device, that the terminal device is provided with a trusted security platform, and determining that the trusted security platform stores certification information of an identity authentication server; obtaining, by the terminal device from the identity authentication server, permission to apply for the electronic identification card with the target service application scope for the user based on the trusted security platform; and generating, by the terminal device, application information required to apply for the electronic identification card with the target service application scope, and sending the application information to the identity authentication server, so that the identity authentication server generates the electronic identification card with the target service application scope for the user based on the application information.

According to the solution of this application, the terminal device applies to the identity authentication server for the permission to apply for the electronic identification card with the target service application scope for the user based on the trusted security platform provided on the terminal device, to apply for the electronic identification card with the target service application scope for the user based on the trusted security platform. In this way, the user who uses the terminal device provided with the trusted security platform can directly apply for an electronic identification card with a relatively broad service application scope. This is convenient for the user.

With reference to the second aspect, in some implementations of the second aspect, before the determining, by the terminal device, that the trusted security platform stores certification information of an identity authentication server, the method further includes: determining, by the terminal device, that the trusted security platform has an electronic identification card application; or when determining that the trusted security platform has no electronic identification card application, downloading and installing, by the terminal device, an electronic identification card application to the trusted security platform.

With reference to the second aspect, in some implementations of the second aspect, the trusted security platform is a trusted execution environment TEE, and the electronic identification card application is a trusted application TA in the TEE; or the trusted security platform is a secure element SE, and the electronic identification card application is a security application in the SE.

With reference to the second aspect, in some implementations of the second aspect, the application information includes face image information and physical identification card information of the user, and the generating, by the terminal device, application information required to apply for the electronic identification card with the target service application scope, and sending the application information to the identity authentication server includes: generating, by the terminal device, the application information through a client application CA in an REE, and sending the application information to the identity authentication server through the CA, where at least one piece of the application information is obtained by the CA from the electronic identification card application; or requesting, by the terminal device through the CA, the electronic identification card application to generate the application information, and the electronic identification card application sends the application information to the identity authentication server.

With reference to the second aspect, in some implementations of the second aspect, the application information further includes signature information, and the signature information is information obtained by the electronic identification card application by performing signing processing on at least one of the face image information and the physical identification card information by using a key of the trusted security platform.

With reference to the second aspect, in some implementations of the second aspect, the application information further includes identification information of the target service application scope.

With reference to the second aspect, in some implementations of the second aspect, the application information is information obtained after encryption processing is performed by using a key of the identity authentication server.

With reference to the second aspect, in some implementations of the second aspect, the determining, by the terminal device, that the trusted security platform stores certification information of an identity authentication server includes: sending, by the terminal device, a query command to the trusted security platform through the CA in the REE, where the query command is used to request to query whether the trusted security platform stores the certification information of the identity authentication server, and the query command carries information that can represent an identity of the identity authentication server; and receiving, by the terminal device, a query success response from the trusted security platform through the CA, where the query success response is used to indicate that the trusted security platform stores the certification information of the identity authentication server.

With reference to the second aspect, in some implementations of the second aspect, the query success response further carries information that can indicate a certificate of the trusted security platform, and the obtaining, by the terminal device from the identity authentication server, permission to apply for the electronic identification card with a target service for the user based on the trusted security platform includes: sending, by the terminal device, a local application authorization request to the identity authentication server, where the local application authorization request carries the information that can indicate the certificate of the trusted security platform; and receiving, by the terminal device, an authorization response message returned by the identity authentication server, where the authorization response message is used to indicate that the identity authentication server allows applying for the electronic identification card with the target service application scope for the user based on the trusted security platform.

With reference to the second aspect, in some implementations of the second aspect, the sending, by the terminal device, a local application authorization request to the identity authentication server includes: sending, by the terminal device, the local application authorization request to the identity authentication server through the CA, and the receiving, by the terminal device, an authorization response message returned by the identity authentication server includes: receiving, by the terminal device through the CA, the authorization response message returned by the identity authentication server; or the sending, by the terminal device, a local application authorization request to the identity authentication server includes: sending, by the terminal device, the local application authorization request to the identity authentication server through the electronic identification card application, and the receiving, by the terminal device, an authorization response message returned by the identity authentication server includes: receiving, by the terminal device, the authorization response message from the identity authentication server through the electronic identification card application.

With reference to the second aspect, in some implementations of the second aspect, the local application authorization request further carries a random number and a signature of the random number, where the signature of the random number is obtained by the trusted security platform by performing signature calculation on the random number by using the key of the trusted security platform; and the random number is generated by the trusted security platform, or is sent by the CA to the trusted security platform by using the query command.

With reference to the second aspect, in some implementations of the second aspect, at least one of the information that can indicate the certificate of the trusted security platform, the random number, and the signature of the random number is information obtained after encryption processing is performed by using the key of the identity authentication server.

With reference to the second aspect, in some implementations of the second aspect, after the receiving, by a terminal device, a trigger instruction, the method further includes: determining, by the terminal device, that the user has not registered the electronic identification card.

According to a third aspect, this application provides an apparatus for upgrading a service application scope of an electronic identification card. The apparatus has functions of the terminal device in the method according to the one of the first aspect or the possible implementations of the first aspect. These functions may be implemented by using hardware, or may be implemented by hardware executing corresponding software. The hardware or software includes one or more units corresponding to these functions.

Optionally, the apparatus for upgrading the service application scope of the electronic identification card in the third aspect may be a terminal device, or may be a chip configured in the terminal device.

According to a fourth aspect, this application provides an apparatus for applying for an electronic identification card. The apparatus has functions of the terminal device in the method according to any one of the second aspect or the possible implementations of the second aspect. These functions may be implemented by using hardware, or may be implemented by hardware executing corresponding software. The hardware or software includes one or more units corresponding to these functions.

Optionally, the apparatus for applying for the electronic identification card in the fourth aspect may be a terminal device, or may be a chip configured in the terminal device.

According to a fifth aspect, this application provides a terminal device, including: an input/output device, configured to receive a trigger instruction, where the trigger instruction is used to request to upgrade a service application scope of an electronic identification card of a user; a processor, configured to: when the input/output device receives the trigger instruction, determine that the terminal device is provided with a trusted security platform, and determine that the trusted security platform stores certification information of an identity authentication server, where the processor is further configured to: when determining that the trusted security platform stores the certification information of the identity authentication server, obtain, from the identity authentication server, permission to upgrade the service application scope of the electronic identification card based on the trusted security platform, and the processor is further configured to generate upgrade information required to upgrade the service application scope of the electronic identification card; and a transceiver, configured to send the upgrade information generated by the processor to the identity authentication server, so that the identity authentication server upgrades the service application scope of the electronic identification card based on the upgrade information.

With reference to the fifth aspect, in some implementations of the fifth aspect, the processor is further configured to: before determining that the trusted security platform stores the certification information of the identity authentication server, determine that the trusted security platform has an electronic identification card application; or the processor is further configured to: when determining that the trusted security platform has no electronic identification card application, download and install an electronic identification card application to the trusted security platform.

With reference to the fifth aspect, in some implementations of the fifth aspect, the trusted security platform is a trusted execution environment TEE, and the electronic identification card application is a trusted application TA in the TEE; or the trusted security platform is a secure element SE, and the electronic identification card application is a security application in the SE.

With reference to the fifth aspect, in some implementations of the fifth aspect, the upgrade information includes face image information and physical identification card information of the user, the processor is configured to generate the upgrade information through a client application CA in an REE, and the transceiver is configured to send the upgrade information generated by the CA to the identity authentication server, where at least one piece of the upgrade information is obtained by the CA from the electronic identification card application; or the processor is configured to request, through the CA, the electronic identification card application to generate the upgrade information, and the transceiver is configured to send the upgrade information generated by the electronic identification card application to the identity authentication server.

With reference to the fifth aspect, in some implementations of the fifth aspect, the upgrade information further includes signature information, and the signature information is information obtained by the electronic identification card application by performing signing processing on at least one of the face image information and the physical identification card information by using a key of the trusted security platform.

With reference to the fifth aspect, in some implementations of the fifth aspect, the upgrade information further includes electronic identification card information, or the upgrade information further includes electronic identification card information and identification information of the service application scope corresponding to the electronic identification card information.

With reference to the fifth aspect, in some implementations of the fifth aspect, the upgrade information is information obtained after encryption processing is performed by using a key of the identity authentication server.

With reference to the fifth aspect, in some implementations of the fifth aspect, the processor is configured to send a query command to the trusted security platform through the CA in the REE, where the query command is used to request to query whether the trusted security platform stores the certification information of the identity authentication server, and the query command carries information that can represent an identity of the identity authentication server; and the processor is further configured to receive a query success response from the trusted security platform through the CA, where the query success response is used to indicate that the trusted security platform stores the certification information of the identity authentication server.

With reference to the fifth aspect, in some implementations of the fifth aspect, the query success response carries information that can indicate a certificate of the trusted security platform, and the transceiver is configured to send a local upgrade authorization request to the identity authentication server, where the local upgrade authorization request carries the information that can indicate the certificate of the trusted security platform; and the transceiver is further configured to receive an authorization response message returned by the identity authentication server, where the authorization response message is used to indicate that the identity authentication server allows upgrading the service application scope of the electronic identification card based on the trusted security platform.

With reference to the fifth aspect, in some implementations of the fifth aspect, the transceiver sends the local upgrade authorization request to the identity authentication server through the CA, and receives, through the CA, the authorization response message returned by the identity authentication server; or the transceiver sends the local upgrade authorization request to the identity authentication server through the electronic identification card application, and receives the authorization response message from the identity authentication server through the electronic identification card application.

With reference to the fifth aspect, in some implementations of the fifth aspect, the local upgrade authorization request further carries a random number and a signature of the random number, where the signature of the random number is obtained by the trusted security platform by performing signature calculation on the random number by using the key of the trusted security platform; and the random number is generated by the trusted security platform, or is sent by the CA to the trusted security platform by using the query command.

With reference to the fifth aspect, in some implementations of the fifth aspect, at least one of the information that can indicate the certificate of the trusted security platform, the random number, and the signature of the random number is information obtained after encryption processing is performed by using the key of the identity authentication server.

Alternatively, the terminal device provided in this application includes a memory, a processor, and an input/output device. The input/output device is configured to detect a user operation to receive a trigger instruction; the memory is configured to store a computer program; and the processor is configured to invoke the computer program from the memory and run the computer program, so that the terminal device performs the method according to any one of the first aspect or the possible implementations of the first aspect.

According to a sixth aspect, this application provides a terminal device, including: an input/output device, configured to receive a trigger instruction, where the trigger instruction is used to request to apply for an electronic identification card with a target service application scope for a user, and the service application scope is used to specify a service to which the electronic identification card can be applicable; a processor, configured to: when the input/output device receives the trigger instruction, determine that the terminal device is provided with a trusted security platform, and determine that the trusted security platform stores certification information of an identity authentication server, where the processor is further configured to obtain, from the identity authentication server, permission to apply for the electronic identification card with the target service application scope for the user based on the trusted security platform, and the processor is further configured to generate application information required to apply for the electronic identification card with the target service application scope; and a transceiver, configured to send the application information to the identity authentication server, so that the identity authentication server generates the electronic identification card with the target service application scope for the user based on the application information.

With reference to the sixth aspect, in some implementations of the sixth aspect, the processor is further configured to: before determining that the trusted security platform stores the certification information of the identity authentication server, determine that the trusted security platform has an electronic identification card application; or the processor is further configured to: when determining that the trusted security platform has no electronic identification card application, download and install an electronic identification card application to the trusted security platform.

With reference to the sixth aspect, in some implementations of the sixth aspect, the trusted security platform is a trusted execution environment TEE, and the electronic identification card application is a trusted application TA in the TEE; or the trusted security platform is a secure element SE, and the electronic identification card application is a security application in the SE.

With reference to the sixth aspect, in some implementations of the sixth aspect, the application information includes face image information and physical identification card information of the user, the processor is configured to generate the application information through a client application CA in an REE, and the transceiver is configured to send the application information generated by the CA to the identity authentication server, where at least one piece of the application information is obtained by the CA from the electronic identification card application; or the processor is configured to request, through the CA, the electronic identification card application to generate the application information, and the transceiver is configured to send the application information generated by the electronic identification card application to the identity authentication server.

With reference to the sixth aspect, in some implementations of the sixth aspect, the application information further includes signature information, and the signature information is information obtained by the electronic identification card application by performing signing processing on at least one of the face image information and the physical identification card information by using a key of the trusted security platform.

With reference to the sixth aspect, in some implementations of the sixth aspect, the application information further includes identification information of the target service application scope.

With reference to the sixth aspect, in some implementations of the sixth aspect, the application information is information obtained after encryption processing is performed by using a key of the identity authentication server.

With reference to the sixth aspect, in some implementations of the sixth aspect, the processor is configured to send a query command to the trusted security platform through the CA in the REE, where the query command is used to request to query whether the trusted security platform stores the certification information of the identity authentication server, and the query command carries information that can represent an identity of the identity authentication server; and the processor is further configured to receive a query success response from the trusted security platform through the CA, where the query success response is used to indicate that the trusted security platform stores the certification information of the identity authentication server.

With reference to the sixth aspect, in some implementations of the sixth aspect, the query success response carries information that can indicate a certificate of the trusted security platform, and the transceiver is configured to send a local application authorization request to the identity authentication server, where the local application authorization request carries the information that can indicate the certificate of the trusted security platform; and the transceiver is further configured to receive an authorization response message returned by the identity authentication server, where the authorization response message is used to indicate that the identity authentication server allows applying for the electronic identification card with the target service application scope for the user based on the trusted security platform.

With reference to the sixth aspect, in some implementations of the sixth aspect, the transceiver is configured to: send the local application authorization request to the identity authentication server through the CA, and receive, through the CA, the authorization response message returned by the identity authentication server; or the transceiver is configured to: send the local application authorization request to the identity authentication server through the electronic identification card application, and receive the authorization response message from the identity authentication server through the electronic identification card application.

With reference to the sixth aspect, in some implementations of the sixth aspect, the local application authorization request further carries a random number and a signature of the random number, where the signature of the random number is obtained by the trusted security platform by performing signature calculation on the random number by using the key of the trusted security platform; and the random number is generated by the trusted security platform, or is sent by the CA to the trusted security platform by using the query command.

With reference to the sixth aspect, in some implementations of the sixth aspect, at least one of the information that can indicate the certificate of the trusted security platform, the random number, and the signature of the random number is information obtained after encryption processing is performed by using the key of the identity authentication server.

Alternatively, the terminal device provided in this application includes a memory, a processor, and an input/output device. The input/output device is configured to detect a user operation to receive a trigger instruction; the memory is configured to store a computer program; and the processor is configured to invoke the computer program from the memory and run the computer program, so that the terminal device performs the method according to any one of the second aspect or the possible implementations of the second aspect.

Optionally, the terminal device may further include a transceiver, configured to implement interaction between the terminal device and the identity authentication server, and between the terminal device and a card wallet application server.

Optionally, the input/output device may be one or more sensors. When there are a plurality of sensors, different sensors may be configured to detect different user operations, or the plurality of different sensors may be configured to detect a same user operation.

Optionally, there may be one or more memories and one or more processors in the terminal device.

According to a seventh aspect, this application provides a computer-readable storage medium. The computer-readable storage medium stores a computer program; and when the computer program is run on a computer, the computer is enabled to perform the method according to any one of the first aspect or the possible implementations of the first aspect.

According to an eighth aspect, this application provides a computer-readable storage medium. The computer-readable storage medium stores a computer program; and when the computer program is run on a computer, the computer is enabled to perform the method according to any one of the second aspect or the possible implementations of the second aspect.

According to a ninth aspect, this application provides a chip, including a memory and a processor. The memory is configured to store a computer program, and the processor is configured to invoke the computer program from the memory and run the computer program, so that a terminal device installed with the chip performs the method according to any one of the first aspect and the possible implementations of the first aspect.

According to a tenth aspect, this application provides a chip, including a memory and a processor. The memory is configured to store a computer program, and the processor is configured to invoke the computer program from the memory and run the computer program, so that a terminal device installed with the chip performs the method according to any one of the second aspect and the possible implementations of the second aspect.

Optionally, there may be one or more memories, and there may be one or more processors.

Optionally, the memory and the processor may be physically independent units, or the memory may be integrated with the processor.

According to an eleventh aspect, this application provides a computer program product. The computer program product includes a computer program; and when the computer program is run on a computer, the computer is enabled to perform the method according to any one of the first aspect or the possible implementations of the first aspect.

According to a twelfth aspect, this application provides a computer program product. The computer program product includes a computer program; and when the computer program is run on a computer, the computer is enabled to perform the method according to any one of the second aspect or the possible implementations of the second aspect.

Optionally, the computer program may be completely or partially stored on the storage medium that is encapsulated along with the processor, or may be partially or completely stored on the memory that is not encapsulated along with the processor.

According to the technical solutions of this application, the terminal device applies to the identity authentication server for the permission to upgrade the service application scope of the electronic identification card of the user based on the trusted security platform provided on the terminal device, or applies to the identity authentication server for the permission to apply for the electronic identification card with the target service application scope for the user based on the trusted security platform, so as to upgrade the service application scope of the electronic identification card of the user based on the trusted security platform, or directly apply for an electronic identification card with a relatively broad service application scope for the user based on the trusted security platform. In one aspect, this can save costs of specially deploying a trusted handling terminal for upgrading the service application scope of the electronic identification card of the user. In another aspect, the user no longer needs to go to a fixed site to upgrade the service application scope of the electronic identification card by using the deployed trusted handling terminal, but completes upgrading of the service application scope of the electronic identification card of the user by operating the terminal device (for example, a mobile phone) instead. A user who has no electronic identification card can directly apply for an electronic identification card with a relatively broad service application scope by using the trusted security platform on the terminal device. This can be convenient for the user.

### BRIEF DESCRIPTION OF DRAWINGS

FIG. 1 is a flowchart of a method for upgrading a service application scope of an electronic identification card according to this application;
FIG. 2A and FIG. 2B are a schematic diagram of upgrading a service application scope of an electronic identification card based on a trusted security platform on a terminal device;
FIG. 3 is a schematic diagram of a user interface UI for performing a management operation on an electronic identification card;
FIG. 4 is a schematic diagram of a prompt box displayed on a user interface UI;
FIG. 5 is a schematic diagram of another user interface UI for performing a management operation on an electronic identification card;
FIG. 6A and FIG. 6B are a schematic diagram illustrating that a terminal device queries whether a trusted security platform stores certification information of an identity authentication server;
FIG. 7A and FIG. 7B are a schematic diagram illustrating that a terminal device applies to an identity authentication server for permission to upgrade a service application scope of an electronic identification card based on a trusted security platform;
FIG. 8 is a schematic diagram illustrating that a terminal device generates upgrade information and sending the upgrade information to an identity authentication server;
FIG. 9 is a schematic diagram of still another user interface UI for performing a management operation on an electronic identification card;
FIG. 10 is a flowchart of a method for applying for an electronic identification card according to this application;
FIG. 11A and FIG. 11B are a schematic diagram illustrating that a terminal device applies for an electronic identification card based on a trusted security platform according to this application;
FIG. 12 is a schematic block diagram of an apparatus 700 for upgrading a service application scope of an electronic identification card according to this application;
FIG. 13 is a schematic block diagram of an apparatus 800 for applying for an electronic identification card according to this application; and
FIG. 14 is a schematic diagram of a structure of a terminal device 900 to which an embodiment of this application is applicable.

### DESCRIPTION OF EMBODIMENTS

The following describes technical solutions of this application with reference to accompanying drawings.

The technical solutions of this application are applicable to a scenario of upgrading a service application scope of an electronic identification card of a user, and may also applicable to a scenario of directly applying for an electronic identification card with a relatively broad service application scope for a user who has no electronic identification card. The service application scope is a scope of services to which the electronic identification card can be applicable. For example, the services to which the electronic identification card can be applicable may include hotel check-in, ticket purchase, real name registration for social software, securities account registration, government affairs handling, and business registration. If an electronic identification card can be applicable to more services, it indicates that a service application scope of the electronic identification card is broader. Otherwise, it indicates that the service application scope of the electronic identification card is narrower.

It should be noted that in this application, the service application scope may be graded, for example, categorized into two levels: a primary level and an enhanced level. Hotel check-in, ticket purchase, real name registration at a cyber bar, and other services of this type are categorized as a primary-level scope; government affairs handling, business registration, remote account opening, and other services of this type are categorized as an enhanced-level scope. For another example, the service application scope is divided into three levels: a low level, a medium level, and a high level, or is divided into a plurality of levels: a first level, a second level, a third level, ..., and so on. "Level" mentioned herein can be understood as: A service application scope corresponding to a higher level covers a service application scope corresponding to a lower level. In addition, other manners of dividing the service application scope may further be included in this application. For example, based on service types, payment, registration, and other services related to basic requirements such as food, clothing, shelter, and transportation are considered as type I; authentication services related to requirements such as making friends and entertainment are considered as type II; and authentication services related to requirements such as government affairs handling and business registration are considered as type III. When a user applies for registering an electronic identification card or requests to upgrade a registered electronic identification card, the user may apply to an identity authentication server based on these types. For example, the user clearly states that a service application scope includes type I and type II during registration application, or clearly states that a new service application scope includes type III when requesting an upgrade.

If a service application scope of an electronic identification card is relatively narrow, a user can use the electronic identification card only to handle limited types of services. For example, the electronic identification card can be used to handle only relatively simple services such as hotel check-in and ticket purchase. If the user wants to use the electronic identification card for services such as government affairs handling and business registration, the user needs to handle these services on a trusted handling terminal deployed by the Ministry of Public Security at a fixed site. However, deploying trusted handling terminals costs a lot, and users use the trusted handling terminals inconveniently.

In view of this, this application provides a method for upgrading a service application scope of an electronic identification card, and a method for directly applying for an electronic identification card with a relatively broad service application scope for a user. By using this method, costs of deploying a trusted handling terminal can be saved; and based on a trusted security platform locally provided on a terminal device, upgrading of a service application scope of an electronic identification card of a user can be completed, or an electronic identification card with a relatively broad service application scope can directly be applied for, for a user who has no electronic identification card. This is convenient for the user.

A terminal device in this application may be any mobile or portable electronic device, including but not limited to a mobile phone, a mobile computer, a tablet computer, a personal digital assistant (personal digital assistant, PDA), or a wearable device (wearable device); or may be a combination of any two or more of the foregoing devices.

A trusted security platform on a terminal device is included in this application. The trusted security platform may be a trusted execution environment (trusted execution environment, TEE) or a secure element (secure element, SE) on the terminal device. A physical carrier of the SE may be an embedded secure element (embedded SE), a secure digital memory card (Secure Digital Memory Card, SD card), a universal integrated circuit card (universal integrated circuit card, UICC), or the like. The trusted security platform mentioned herein may be considered as a part of the terminal device, or may be considered as a module independent of the terminal device. For example, the trusted security platform may be a removable or pluggable hardware part on the terminal device.

The TEE is relative to a rich execution environment (rich execution environment, REE). The REE is an open environment, on a terminal device, created for multi-functionality and richness purposes, runs an operating system (for example, Android OS or iOS) of the terminal device, and is available for download by a third party after the device is manufactured. The TEE is a concept proposed by the Global Platform (global platform, GP) organization for an REE on a mobile intelligent terminal, and is a running environment that coexists with the REE but independent of the REE. The TEE runs a trusted operating system (trusted operating systems, Trusted OS), and can provide security services for the operating system (namely, a Rich OS) running in the REE. A combination of hardware and software can be used to ensure secure transmission, storage, processing of a variety of sensitive data in the TEE, and ensure confidentiality and integrity of TA execution, and security of end-to-end data access permission. Because the TEE has its own execution space, a security level of the TEE is higher than that of the Rich OS. Security of the SE is better than that of the TEE.

A series of trusted applications (trusted application, TA) run in the TEE. The TEE can provide the TAs with security services, for example, integrity of application execution, secure storage, secure interaction with an input/output device, key management, an encryption algorithm, and secure communication with a client application (client application, CA) in the REE. Therefore, different from the CA in the REE, a TA is a trusted application while the CA is a common application or a general application. In addition, the TA runs in the TEE, and can provide security service-related applications for the CA in the REE or another TA in the TEE. The CA runs in the REE, and may call or access the TA in the TEE through a client application programming interface (application programming interface, API) of the TEE, that is, an interface for accessing the TEE by the REE.

The following separately details a scenario of upgrading a service application scope of an electronic identification card (described as a scenario 1 below), and a scenario of directly applying for an electronic identification card with a relatively broad service application scope for a user (described as a scenario 2 below).

A card wallet application, a client application CA, and an electronic identification card application that are on a terminal device may be included in the embodiments of this application. The card wallet application may be an REE-side application of the terminal device (for example, a mobile phone), for example, Alipay, WeChat, and Huawei Wallet, and may be used to accommodate and manage the electronic identification card application. The electronic identification card application may be a trusted execution environment TEE-side or secure element SE-side application of the terminal device. The client application CA is an REE-side application that is corresponding to the electronic identification card application and that may perform interactive communication with the TEE-side or SE-side electronic identification card application. A TEE is used as an example: The client application CA may perform communication through the client application programming interface (application programming interface, API) of the TEE, that is, the TEE client API. An SE is used as an example: The client application CA may perform communication by using an SE access application programming interface (an SE access API, for example, an open mobile API).

The card wallet application can manage (for example, register/apply for, upgrade, and deregister/delete) the electronic identification card application by using the client application CA. Both the REE-side client application CA and the TEE-side or SE-side electronic identification card application may be provided by an electronic identification card service provider.

In addition, a card wallet application server (denoted as S1), a trusted security platform server (denoted as S2), and an identity authentication server (denoted as S3) may further be included in the embodiments of this application. S2 is a party that delivers a certificate (for example, a public key certificate of the trusted security platform) to the trusted security platform. S2 may be used to download the electronic identification card application or electronic identification card application-related data to the trusted security platform for the electronic identification card service provider.

### Scenario 1

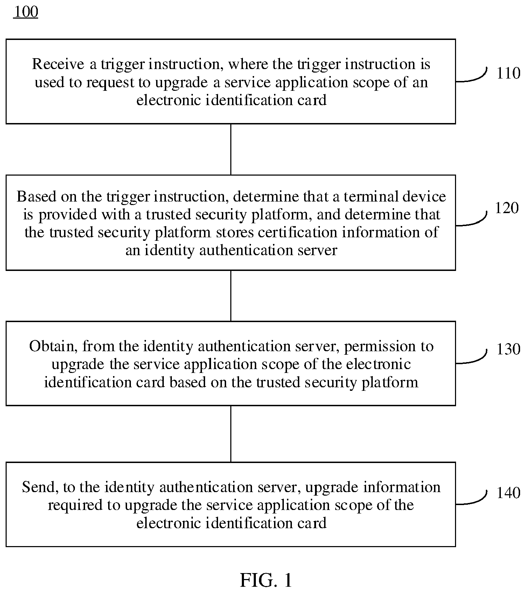

FIG. 1 is a flowchart of a method for upgrading a service application scope of an electronic identification card according to this application.

A premise of a technical solution shown in FIG. 1 may be: A trusted security platform (or a trusted security platform server) on a terminal device and an identity authentication server each preconfigure certification information (for example, a certificate) of the other party. For example, the identity authentication server prestores certificate information of the trusted security platform, and the trusted security platform (exactly may be an electronic identification card application) prestores certificate information of the identity authentication server. In addition, if the trusted security platform needs to exchange information with the identity authentication server by using the trusted security platform server, the trusted security platform and the identity authentication server may further prestore certificate information of the trusted security platform server. If the electronic identification card application on the trusted security platform needs to exchange information with a card wallet application server and the identity authentication server by using a card wallet application, a premise of the technical solution in this application may further be: The trusted security platform prestores certificate information of the card wallet application server and the certificate information of the identity authentication server (optional), the card wallet application server prestores the certificate information of the trusted security platform and the certificate information of the identity authentication server, and the identity authentication server prestores the certificate information of the card wallet application server and the certificate information of the trusted security platform (optional). On the foregoing premises, each execution body may further prestore a root certificate of a certification authority (certification authority, CA), and the foregoing certificate information may be a public key certificate (which is a certificate issued by the certification authority).

110. The terminal device receives a trigger instruction.

The trigger instruction is used to request to upgrade a service application scope of an electronic identification card of a user.

A service application scope of an electronic identification card is used to specify a service to which the electronic identification card can be applicable. The services in this application may include services that can be handled by using an electronic identification card, for example, hotel check-in, ticket purchase, social interaction between users, registration at a cyber bar, government affairs handling, securities account registration, and business registration. Different services can be handled specific to different service application scopes of electronic identification cards. For example, if an electronic identification card applied for by a user can handle only some basic services: hotel check-in, ticket purchase, social interaction between users, and registration at a cyber bar, a service application scope of this electronic identification card is relatively narrow. In contrast, if this electronic identification card can further handle services such as government affairs handling, securities account registration, and business registration in addition to handling of these basic services, the service application scope of this electronic identification card is relatively broad.

With continuous popularization and generalization of electronic identification cards, a service application scope of an electronic identification card may be broadened increasingly. Accordingly, a service application scope of an electronic identification card of a user may be upgraded depending on a requirement, to obtain a broader service application scope.

In this embodiment of this application, the trigger instruction may be entered by a user by using a touchscreen of the terminal device, or in a form of a voice or the like. For example, the card wallet application or a client application CA provides, by using a user interface (user interface, UI), the user with an entry that can be triggered to upgrade a registered electronic identification card. The entry may be implemented in a form of a button or the like. Certainly, an entry for performing an upgrade operation may alternatively be provided for the user by using a UI provided by the electronic identification card application on the trusted security platform.

120. Based on the trigger instruction, the terminal device determines that the terminal device is provided with a trusted security platform, and determines that the trusted security platform stores certification information of an identity authentication server.

In this embodiment of this application, the certification information of the identity authentication server is used to represent a trusted identity of the identity authentication server. For example, the certification information may be the certificate of the identity authentication server.

As described above, the trusted security platform in this application may be a TEE or an SE. Therefore, in step 120, based on the trigger instruction, the terminal device determines whether the terminal device locally has a TEE or an SE. If determining that the terminal device locally has a TEE and/or an SE, the terminal device further determines whether the TEE or the SE has an electronic identification card application. If the trusted security platform is the TEE, the electronic identification card application herein is a TA running in the TEE. If the trusted security platform is the SE, the electronic identification card application herein is a security application applet running in the SE.

Certainly, if the terminal device is provided with both a TEE and an SE, the terminal device may first detect, according to a preset program, whether the terminal device is provided with a TEE; and when the terminal device is provided with the TEE, the terminal device no longer detects whether the terminal device is provided an SE. Whether the terminal device is provided with an SE is further determined only when the terminal device is not provided with a TEE. Alternatively, by default, the terminal device may first determine whether the terminal device is provided with an SE; and when no SE is provided, whether a TEE is provided is then determined.

Further, when the terminal device is locally provided with the trusted security platform (that is, the TEE or the SE) or the trusted security platform has the electronic identification card application, the terminal device needs to determine whether the trusted security platform stores the certification information of the identity authentication server.

That the trusted security platform provided on the terminal device is the TEE is used as an example. The CA running in an REE on the terminal device sends a query command to the electronic identification card application (which is specifically the TA) running in the TEE, where the query command is used to query whether the electronic identification card application stores the certification information of the identity authentication server. When determining that the electronic identification card application stores the certification information of the identity authentication server, the electronic identification card application returns a query success result to the CA, where the query success result is used to indicate that the trusted security platform stores the certification information of the identity authentication server. The CA obtains the query success result, and then the terminal device determines that the trusted security platform stores the certification information of the identity authentication server.

A case in which the trusted security platform provided on the terminal device is the SE is similar to the case in which the trusted security platform is the TEE. The CA sends the query command to the security program applet in the SE. When the applet stores the certification information of the identity authentication server, the applet sends the query success response to the CA. In this way, the terminal device can determine that the trusted security platform stores the certification information of the identity authentication server.

130. The terminal device obtains, from the identity authentication server, permission to upgrade the service application scope of the electronic identification card based on the trusted security platform.

When determining that the trusted security platform stores the certification information of the identity authentication server, the terminal device applies to the identity authentication server for the permission to upgrade the service application scope of the electronic identification card based on the trusted security platform. After obtaining approval of the identity authentication server, the terminal device obtains the permission to upgrade the service application scope of the electronic identification card of the user based on the local trusted security platform.

Specifically, there are a plurality of feasible solutions in which the terminal device applies to the identity authentication server for the permission to upgrade the service application scope of the electronic identification card based on the trusted security platform. For example, by using step 120, the CA running in the REE on the terminal device receives the query success response from the electronic identification card application, where the query success response carries information that can indicate the certificate of the trusted security platform. After receiving the query success response, the CA sends a local upgrade authorization request to the identity authentication server, where the local upgrade authorization request is used to request to upgrade the application scope of the electronic identification card based on the trusted security platform provided on the terminal device, and the local upgrade authorization request carries the information that can indicate the certificate of the trusted security platform, so that the identity authentication server verifies the trusted security platform. If the verification succeeds, the identity authentication server agrees to upgrade the service application scope of the electronic identification card based on the trusted security platform provided on the terminal device. For another example, alternatively, the electronic identification card application running in the TEE on the terminal device may send a local upgrade authorization request to the identity authentication server, to request to obtain the permission to upgrade the service application scope of the electronic identification card based on the trusted security platform. Alternatively, after determining that the terminal device is provided with the trusted security platform, the terminal device may use the card wallet application server to apply to the identity authentication server for the permission to upgrade the service application scope of the electronic identification card based on the trusted security platform. The following details the plurality of solutions in which the terminal device obtains, from the identity authentication server, the permission to upgrade the service application scope of the electronic identification card based on the trusted security platform.

140. The terminal device sends, to the identity authentication server, upgrade information required to upgrade the service application scope of the electronic identification card of the user, so that the identity authentication server upgrades the application scope of the electronic identification card of the user based on the upgrade information.

The upgrade information is used by the identity authentication server to upgrade the service application scope of the electronic identification card of the user. The upgrade information includes at least face image information and physical identification card information of the user. The following details a process of upgrading, by the identity authentication server, the electronic identification card of the user based on the upgrade information.

In the technical solution of this application, the terminal device upgrades the service application scope of the electronic identification card based on the trusted security platform, for example, the TEE or the SE, provided on the terminal device, and no longer needs to use a trusted handling terminal deployed at a fixed site. This can save costs of deploying a trusted handling terminal, and can be convenient for the user.

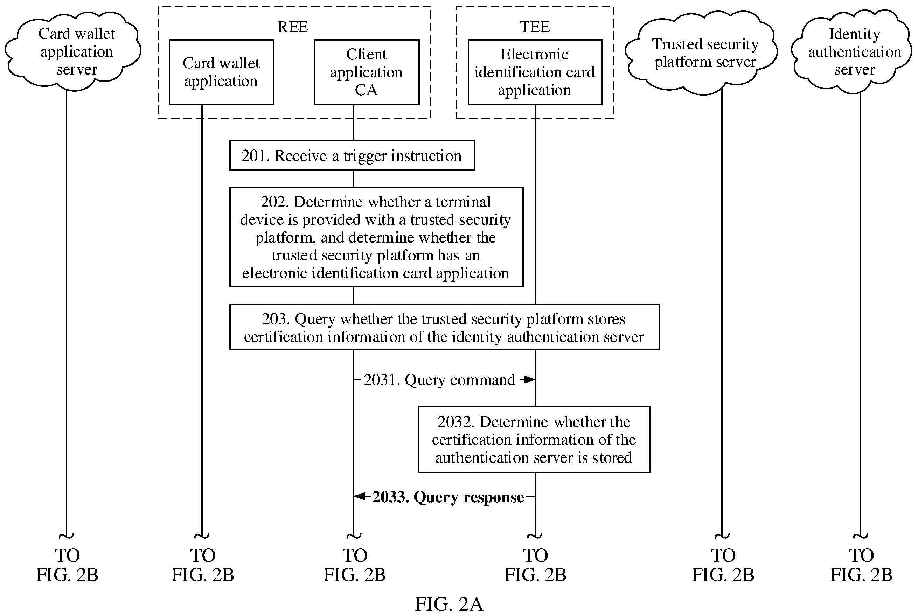

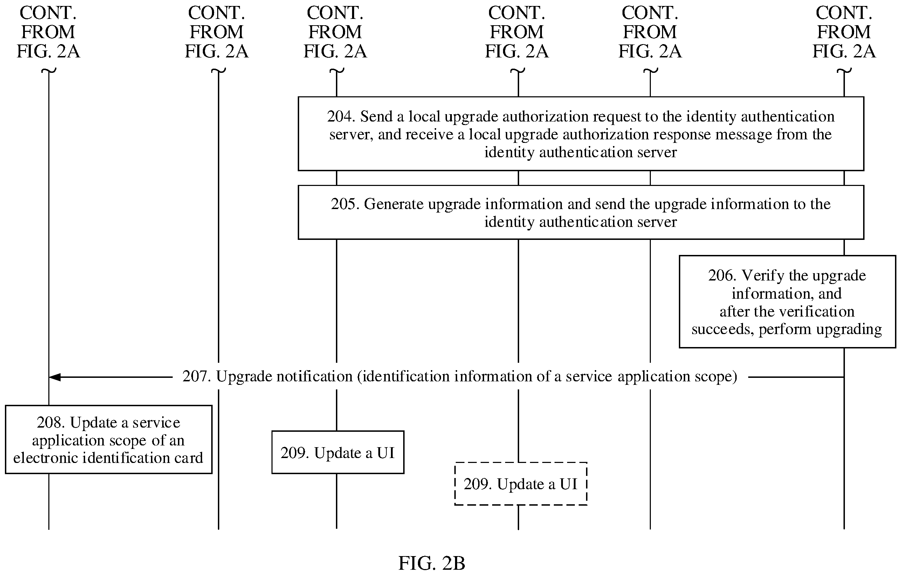

The foregoing describes, with reference to FIG. 1 from a perspective of the terminal device, the process of upgrading the service application scope of the electronic identification card based on the trusted security platform. The following provides descriptions from a perspective of an inner implementation of a terminal device with reference to FIG. 2A and FIG. 2B.

FIG. 2A and FIG. 2B are a flowchart of upgrading a service application scope of an electronic identification card based on a trusted security platform on a terminal device according to this application.

Possible premises of a technical solution shown in FIG. 2A and FIG. 2B are the same as those of the technical solution shown in FIG. 1. Details are not described herein again.

201. A terminal device receives a trigger instruction through a client application CA in an REE, where the trigger instruction is used to request to upgrade a service application scope of an electronic identification card of a user.

That the terminal device receives the trigger instruction based on the CA in the REE means that the CA receives the trigger instruction.

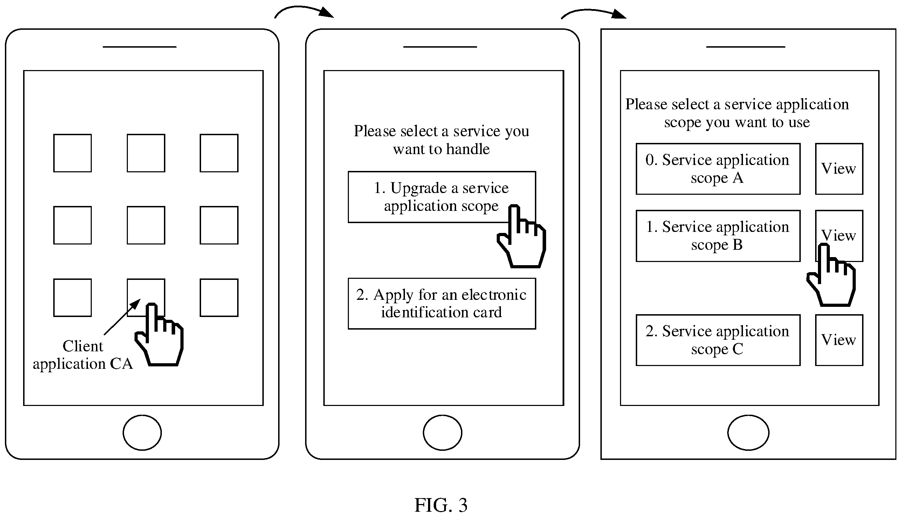

As described above, the client application CA may be accommodated in a card wallet application, and the CA provides an entry for managing the electronic identification card by the user. FIG. 3 is a schematic diagram of a user interface UI for performing a management operation on an electronic identification card.

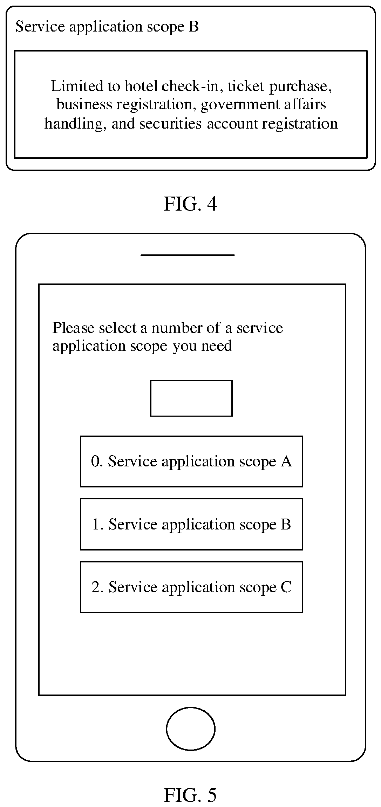

The terminal device starts the CA by detecting operations of the user such as "tapping" and "touch", and then enters an electronic identification card management screen. After entering the management screen, the management screen may prompt a user to select a service that needs to be handled. For example, services provided by the CA include two types of services: upgrading a service application scope of an electronic identification card, and applying for an electronic identification card. For a user who has applied for an electronic identification card, if the user needs to upgrade a service application scope of the electronic identification card, the user may select the "upgrade a service application scope" service. If a user has not applied for an electronic identification card and wants to apply for an electronic identification card, the user may select "apply for an electronic identification card". The former is applicable to the scenario 1, and the latter is applicable to the scenario 2. Using the scenario 1 as an example, if a user selects "upgrade a service application scope" by using an operation such as "tapping", the management screen presents a prompt screen, where the prompt screen is used to prompt the user to select a needed service application scope. Certainly, during specific implementation, the CA or an electronic identification card application may alternatively present one of the foregoing entries to a user depending on an actual case. For example, if a user has not registered an electronic identification card function, after the user enables the card wallet application or the CA, the "apply for an electronic identification card" function button is presented to the user. If a user has registered an electronic identification card function and the electronic identification card has a primary-level or low-level service application scope, after the user enables the card wallet application, the CA, or the electronic identification card application, the "upgrade a service application scope" function button is presented to the user. As shown in FIG. 3, it is assumed that the electronic identification card application divides service application scopes of electronic identification cards into three categories: a service application scope A, a service application scope B, and a service application scope C. Further, a user may tap a "view" button to view services included in each service application scope. For example, if the user chooses to view the service application scope B, the management screen provided on the CA may pop up a prompt box shown in FIG. 4. FIG. 4 is a schematic diagram of a prompt box displayed on a user interface UI. As shown in FIG. 4, text information in the prompt box is used to indicate services that can be handled by an electronic identification card with the service application scope B. If the user wants to choose the service application scope B, the user taps a "service application scope B" button. The terminal device detects the tapping operation of the user, and then triggers a procedure for upgrading a service application scope of an electronic identification card. The trigger instruction in this embodiment of this application may be triggered by the terminal device by detecting the tapping operation of the user. Alternatively, the electronic identification card application may number service application scopes, and the user manually enters a number of a selected service application scope. FIG. 5 is a schematic diagram of another user interface UI for performing a management operation on an electronic identification card. As shown in FIG. 5, a service application scope A is corresponding to a number 0, a service application scope B is corresponding to a number 1, and a service application scope C is corresponding to a number 2. If the user chooses the service application scope B, the user enters a digit "1" into an input box provided on the management screen, to indicate that the user applies for upgrading a service application scope of an electronic identification card to the service application scope B. The terminal device detects the input operation of the user, and then triggers a procedure for upgrading a service application scope of an electronic identification card.

The tapping operation or the input operation of the user may be detected by the CA on the terminal device. When detecting the tapping operation or the input operation of the user, the CA receives the trigger instruction, to trigger upgrading of a service application scope of an electronic identification card.

It should be noted that the tapping operation or the input operation mentioned herein are merely used as examples, and a person skilled in the art can figure out other manners or technical means based on the prior art to obtain the trigger instruction of the user.

Optionally, after receiving, from the user, the trigger instruction for upgrading the service application scope of the electronic identification card, the CA may determine whether the user has registered an electronic identification card. If determining that the user has registered an electronic identification card, the CA performs step 202 and a subsequent procedure. If determining that the user has not registered an electronic identification card, the CA may prompt the user to register an electronic identification card first.

Specifically, after receiving the trigger instruction for upgrading the service application scope of the electronic identification card, the CA may query a card wallet application server about whether the user has registered an electronic identification card. Alternatively, the CA may query a trusted security platform on the terminal device.

202. Based on the trigger instruction, the CA determines that the terminal device is locally provided with a trusted security platform, and determines whether the trusted security platform has an electronic identification card application.

As described above, the trusted security platform may be a TEE or an SE. Therefore, if determining that the terminal device is provided with a TEE or an SE, the CA considers that the terminal device is locally provided with a trusted security platform. Further, the CA determines whether the trusted security platform has an electronic identification card application.

If the trusted security platform is the TEE, the client application needs to determine whether the TEE has a trusted application (trusted application, TA) corresponding to the TEE. In other words, when the trusted security platform is specifically the TEE, the electronic identification card application is specifically the TA. If the trusted security platform is the SE, the client application needs to determine whether the SE has an applet applet corresponding to the SE. In other words, when the trusted security platform is the SE, the electronic identification card application is specifically the applet.

A person skilled in the art should understand that a plurality of TAs run in the TEE, and the TA mentioned herein is the electronic identification card application TA in the plurality of TAs. Likewise, the SE includes a plurality of applets, and the applet mentioned herein is the electronic identification card application applet in the plurality of applets. The electronic identification card application TA in the TEE and the electronic identification card application applet in the SE are collectively referred to as electronic identification card applications below. Relative to the CA, the electronic identification card application is a trusted application.

Specifically, there are a plurality of manners for determining, by the CA, whether the terminal device is locally provided with a trusted security platform and whether the trusted security platform has an electronic identification card application.

That the trusted security platform is the TEE is used as an example. For example, whether there is a TEE locally or whether the TEE is usable is determined by performing a TEE context (TEE context) initialization operation. After a TEE context is initialized, whether the TEE has an electronic identification card application TA is determined by performing an open session (open session) creation operation. Alternatively, after obtaining a TA list from an audit (audit) secure domain (secure domain, SD) by performing a TA query operation (get list of TA), the CA determines whether there is an electronic identification card application TA. For specific content of the TEE context initialization operation and the open session creation operation, refer to the TEE Client API Specification (TEE Client API Specification) published by the Global Platform (global platform, GP) organization. The former is used to create a connection between the client application CA and a TEE on the terminal; and if the connection succeeds, it can be considered that the TEE exists. The latter is used to create an open session between the client application CA and a specific TA in the TEE; and if the open session creation succeeds, it can be considered that the TA exists. For specific content of the TA query operation, refer to the TEE Management Framework Specification (TEE Management Framework Specification) published by the GP. The TA query operation is to get a list of all TAs (represented by universally unique identifiers (uniform unique identity, UUID) of the TAs) directly or indirectly associated with a secure domain, for example, an audit SD, in the TEE, so that the CA determines, based on the obtained UUIDs, whether there is a UUID of the electronic identification card application; and if the UUID of the electronic identification card application exists, it is considered that the TA exists.

Then, that the security platform is the SE is used as an example. If the terminal device accesses the SE through an open mobile API (open mobile API, OMAPI), a function provided by the interface specification may be used to perform the foregoing determining. The OMAPI was published by a SIMalliance (SIMalliance), and has been handed over to the GP at present. For example, all readers readers (SIM/SD/eSE slot) on the terminal device are obtained by using an obtained reader function getReaders(), and then whether an SE has been inserted into each reader is queried by using an SE status query function isSecureElementPresent(). Alternatively, further, whether an SE stores an electronic identification card application applet may be queried by creating a session with each SE by using an open session creation function openSession(). For a specific process, refer to the OMAPI standard.

Optionally, if the CA determines that the trusted security platform has no electronic identification card application, an electronic identification card application is downloaded and installed to the trusted security platform. For example, the trusted security platform may request an identity authentication server, and the trusted security platform may download an electronic identification card application; or an electronic identification card application may directly be downloaded from an authorized identity authentication server. Then, step 203 is performed.

When determining that the trusted security platform has an electronic identification card application, the CA directly performs step 203.

203. The terminal device queries whether the trusted security platform stores certification information of an identity authentication server.

Specifically, by using the following steps 2031 to 2033, the client application CA may query whether the trusted security platform stores the certification information of the identity authentication server.

2031. The CA sends a query command to the electronic identification card application, where the query command is used to request to query whether the electronic identification card application stores the certification information of the identity authentication server.

The query command carries information that can represent an identity of the identity authentication server, for example, an identifier or a name of the identity authentication server.

The certification information of the identity authentication server may be information that can represent a certificate of the identity authentication server, for example, may be the certificate (for example, a public key certificate) of the identity authentication server.

2032. The electronic identification card application queries whether the electronic identification card application stores the certification information of the identity authentication server (for example, the certificate of the identity authentication server).

2033. The electronic identification card application returns a query response to the CA.

The query response carries a query result, and the query result is used to indicate whether the electronic identification card application stores the certification information of the identity authentication server.

Optionally, if the electronic identification card application stores the certification information of the identity authentication server, the electronic identification card application may return a query success response to the CA. Further, the query success response carries information used to indicate that the electronic identification card application stores the certification information of the identity authentication server, for example, query result information (success) and/or the information that can represent the certificate of the identity authentication server (for example, the public key certificate of the identity authentication server, or a certificate sequence number, an identifier of the trusted security platform, and an identifier of the terminal device that are associated with the public key certificate, and other information).

It should be understood that if the electronic identification card application finds no certification information of the identity authentication server, the query result in the query response is used to indicate that the electronic identification card application does not store the certification information of the identity authentication server.

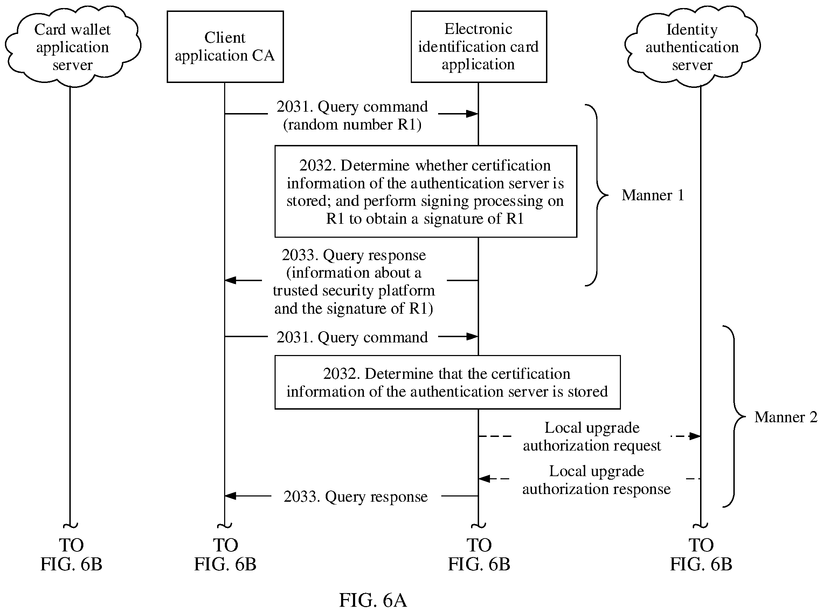

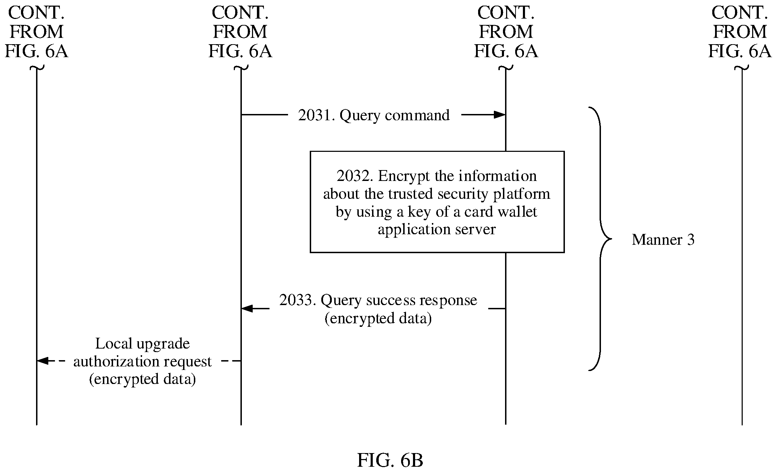

In addition, there may be other specific implementations for steps 2031 to 2033. For the implementations, refer to a manner 1, a manner 2, and a manner 3 in FIG. 6A and FIG. 6B, respectively.

FIG. 6A and FIG. 6B are a schematic diagram illustrating that a terminal device queries whether a trusted security platform stores certification information of an identity authentication server.

### Manner 1

2031. The CA sends a query command to the electronic identification card application, where the query command carries a random number (denoted as R1 below) in addition to information that can represent an identity of the identity authentication server.

R1 may be generated by the CA or generated on the REE side.

2032. The electronic identification card application queries whether the electronic identification card application stores the certification information of the identity authentication server, and performs signature calculation on R1 to obtain a signature of R1.

In step 2032, the signature calculation may be calculating a hash value for the random number, and encrypting the hash value by using a key (for example, a private key of the trusted security platform or a private key of the electronic identification card application). Certainly, the signature calculation may alternatively be performed by using another existing technical means.

2033. The electronic identification card application returns a query response to the CA.

If the electronic identification card application stores the certification information of the identity authentication server, the electronic identification card application returns a query success response to the CA. The query success response carries the signature of R1 in addition to information that can represent a certificate of the identity authentication server.

Optionally, in step 2031, the query command may alternatively not carry a random number. In other words, the CA does not send a random number to the electronic identification card application.

In step 2032, after receiving the query command, if determining that the electronic identification card application stores the certification information of the identity authentication server, the electronic identification card application may generate a random number (denoted as R2 below), and perform signature calculation on R2 to obtain a signature of R2.

In step 2033, the query response returned by the electronic identification card application to the CA carries R2 and the signature of R2 in addition to the information that can represent the certificate of the identity authentication server.

It should be understood that because R2 is generated by the electronic identification card application, the electronic identification card application also needs to send R2 to the CA while returning the signature of R2 to the CA. In contrast, in the example of R1, because R1 is generated on the CA side, the electronic identification card application needs to return only the signature of R1.

Specifically, when performing the signature calculation on R1 or R2, the electronic identification card application may perform the signature calculation on R by using a key of the trusted security platform, to obtain the signature of R1 or the signature of R2.

Further, in step 2033 in the foregoing embodiments, the query response may further carry information that can indicate a certificate of the trusted security platform (referred to as information about the trusted security platform), so that the identity authentication server determines the certificate of the trusted security platform based on the information, and verifies the signatures of R. The information about the trusted security platform may be a certificate sequence number of the trusted security platform, an identifier of the trusted security platform, identification information of the terminal device, and the like. For example, when the trusted security platform is the TEE, the information about the trusted security platform mentioned herein may be a certificate sequence number of the TEE, an identifier of the TEE, and an identifier of the terminal device.

### Manner 2

2031. The CA sends a query command to the electronic identification card application.

For step 2031 of the manner 2, refer to step 2031 of the manner 1. Details are not described herein again.

2032. The electronic identification card application determines that the electronic identification card application stores the certification information of the identity authentication server.

2033. After obtaining, from the identity authentication server, an authorization for upgrading the service application scope of the electronic application card based on the trusted security platform provided on the terminal device, the electronic identification card application returns a query success response to the CA.

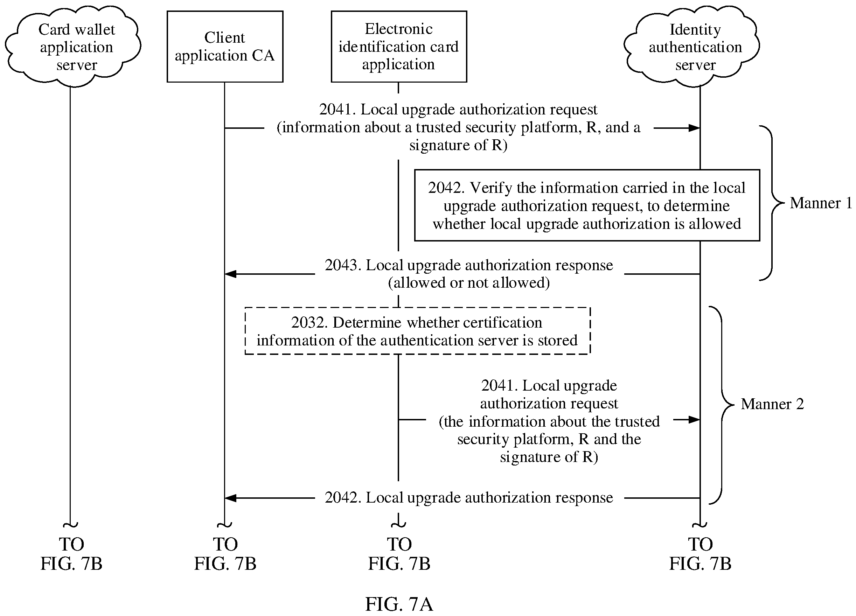

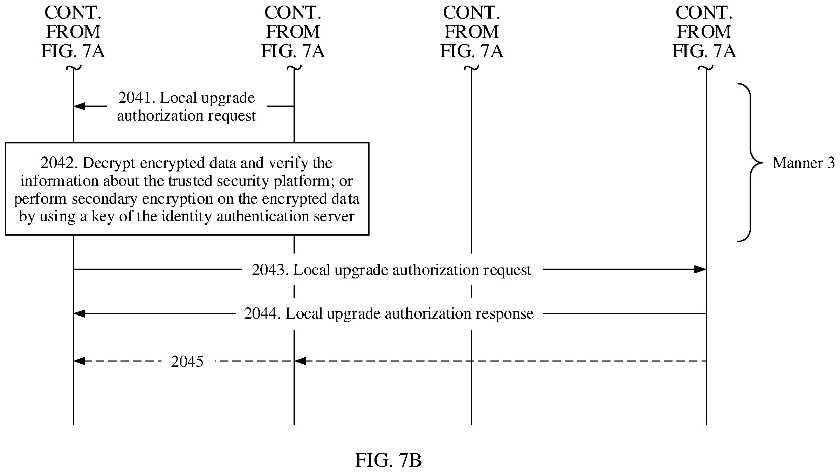

For details about the obtaining, by the electronic identification card application from the identity authentication server, an authorization for upgrading the service application scope of the electronic application card based on the trusted security platform provided on the terminal device, refer to a method described in step 204 shown in FIG. 7A and FIG. 7B below.

The query success response may carry at least one of information that can represent a certificate of the identity authentication server and a local upgrade authorization result (success).

### Manner 3

2031. The CA sends a query request to the electronic identification card application, where the query request is used to request to query whether the electronic identification card application has the certification information of the identity authentication server.

If a query command in step 2031 carries a random number R1, in step 2302, the electronic identification card application performs signature calculation on R1 by using a key of the trusted security platform, to obtain a signature of R1. Alternatively, if a query command does not carry a random number R1, in step 2032, after the electronic identification card application finds the certification information of the identity authentication server, the electronic identification card application generates a random number R2, and performs signature calculation on R2 by using a key of the trusted security platform, to obtain a signature of R2.

2032. After finding that the electronic identification card application stores the certification information of the identity authentication server, the electronic identification card application performs an encryption operation on at least one of information about the trusted security platform and the signature of the random number by using a key of the card wallet application server, to obtain encrypted data.

2033. The electronic identification card application sends a query success response to the CA, where the query success response carries the encrypted data.

If the CA receives the query success response from the electronic identification card application, it indicates that the electronic identification card application stores the certification information of the identity authentication server.

It should be noted that after the CA receives the encrypted data carried in the query success response, the CA may send the encrypted data to the card wallet application server through the CArd wallet application, so that the card wallet application server decrypts the encrypted data and performs authentication (for example, verifies the signature of the random number) on the decrypted data (data before the encryption in step 2032).

In step 203, the CA may query the trusted security platform to learn whether the trusted security platform stores the certification information of the identity authentication server. When the trusted security platform stores the certification information of the identity authentication server, the terminal device performs step 204 and subsequent steps.

It should be noted that, the information about the trusted security platform and possible random number information that are included in this query process help the identity authentication server confirm whether the terminal device has an authorized trusted security platform in the following step 204, to decide whether to allow an authorization for upgrading the service application scope of the electronic application card based on the trusted security platform locally provided on the terminal device.

204. The terminal device sends a local upgrade authorization request to the identity authentication server, and receives a local upgrade authorization response message from the identity authentication server.

In step 204, the terminal device applies to the identity authentication server for permission to upgrade the application scope of the electronic application card of the user based on the trusted security platform. For details, refer to a plurality of implementations shown in FIG. 7A and FIG. 7B. FIG. 7A and FIG. 7B are a schematic diagram illustrating that a terminal device applies to an identity authentication server for permission to upgrade a service application scope of an electronic identification card based on a trusted security platform.

### Manner 1

The terminal device sends a local upgrade authorization request to the identity authentication server through the CA.

2041. The CA sends the local upgrade authorization request to the identity authentication server, and the identity authentication server receives the local upgrade authorization request.

The CA learns whether the electronic identification card application stores the certification information of the identity authentication server. For example, the CA can perform determining in the manner 1 in step 203 based on the received query response. If the electronic identification card application stores the certification information of the identity authentication server, the CA sends the local upgrade authorization request to the identity authentication server.

The local upgrade authorization request is used to request the identity authentication server to allow upgrading the service application scope of the electronic identification card based on the local trusted security platform on the terminal device. The local upgrade authorization request carries the information about the trusted security platform.

Optionally, the local upgrade authorization request further carries a random number R and a signature of the random number R. The random number R and the signature of the random number R herein may be R1 and the signature of R1 in step 203, or may be R2 and the signature of R2 in step 203.

Optionally, the local upgrade authorization request may further carry the identification information of the terminal device.

At least one of the information about the trusted security platform, the random number, the signature of the random number (for example, R1 and the signature of R1, or R2 and the signature of R2), and the identification information of the terminal device may be data obtained after encryption processing is performed by using a key (for example, a public key or a symmetric key) of the identity authentication server.

2042. The identity authentication server verifies the information carried in the local upgrade authorization request, to determine whether the local upgrade authorization request is allowed.

Whether the local upgrade authorization is allowed means whether upgrading of the service application scope of the electronic identification card of the user based on the trusted security platform on the terminal device is approved.

Specifically, the identity authentication server receives the local upgrade authorization request, and verifies the information (for example, the information about the trusted security platform, the random number, and the signature of the random number) carried in the local upgrade authorization request. First, the identity authentication server obtains the certificate of the trusted security platform based on the information about the trusted security platform, and verifies the certificate of the trusted security platform by using a preconfigured root certificate of a certification authority. For example, when the information about the trusted security platform includes a public key certificate of the trusted security platform, the identity authentication server may directly obtain the public key certificate. Alternatively, when the information about the trusted security platform includes at least one of the sequence number of the public key certificate, the identifier of the trusted security platform, the identifier of the terminal device, and the like, the identity authentication server may find the corresponding public key certificate based on these pieces of information (it should be noted that the identity authentication server has prestored an association relationship between these pieces of information and the public key certificate). Then, the identity authentication server can verify validity of the public key certificate by using an existing technical means (for example, verify validity of a signature of the public key certificate by using the root certificate). Afterwards, the identity authentication server verifies the signature of the random number R by using the public key certificate. For example, the identity authentication server verifies the signature by using an existing technical means; decrypts the signature of R by using a public key corresponding to the public key certificate, to obtain a hash value of the signature of R; calculates a hash value of the received random number R; and compares the decrypted hash value with the calculated hash value. If the verification succeeds, the identity authentication server agrees to upgrade the service application scope of the electronic identification card based on the trusted security platform provided on the terminal device. If the verification fails, the identity authentication server does not agree to upgrade the service application scope of the electronic identification card.

2043. The identity authentication server returns a local upgrade authorization response to the CA.

The local upgrade authorization response is used to indicate whether the identity authentication server agrees to upgrade the service application scope of the electronic identification card based on the trusted security platform provided on the terminal device.

When the identity authentication server agrees to upgrade the service application scope of the electronic identification card based on the trusted security platform, the identity authentication server returns an authorization response message to the CA, where the authorization response message is used to indicate that the identity authentication server allows upgrading the service application scope of the electronic identification card based on the trusted security platform. Alternatively, the local upgrade authorization response may carry indication information, where the indication information is used to indicate that the identity authentication server agrees to upgrade the service application scope of the electronic identification card based on the trusted security platform.

When the identity authentication server does not agree to upgrade the service application scope of the electronic identification card based on the trusted security platform, the identity authentication server returns a negative response message to the CA. Alternatively, the local upgrade authorization response may carry indication information, where the indication information is used to indicate that the identity authentication server does not agree to upgrade the service application scope of the electronic identification card based on the trusted security platform.

### Manner 2

The terminal device sends a local upgrade authorization request to the identity authentication server through the electronic identification card application.

In the manner 2, the CA requests the electronic identification card application to directly send the local upgrade authorization request to the identity authentication server after the electronic identification card application finds that the trusted security platform stores the certification information of the identity authentication server.

As shown in the manner 2 in FIG. 7A, for ease of understanding, step 2032 of the manner 2 in FIG. 6A is illustrated by using a dashed line in the manner 2 in FIG. 7A. This indicates that in the manner 2 in FIG. 7A, the terminal device may proceed to step 2041 after performing steps 2031 and 2032 of the manner 2 in FIG. 6A.

2031. The CA sends the query command to the electronic identification card application, where the query command carries the information that can represent the identity of the identity authentication server.

The query command may further carry the random number R.

2032. In response to the query command, the electronic identification card application queries whether the trusted security platform stores the certification information of the identity authentication server.

For steps 2031 and 2032, refer to the foregoing steps 2031 and 2032 of the manner 1 or the manner 2 shown in FIG. 6A. Specific carried information is similar to that shown in FIG. 6A. Details are not described herein again.

2041. When finding that the trusted security platform stores the certification information of the identity authentication server, the electronic identification card application sends the local upgrade authorization request to the identity authentication server.

The local upgrade authorization request carries the information about the trusted security platform.

Optionally, if the query command carries a random number R1, the electronic identification card application performs signature calculation on R1 to obtain a signature of R1, and adds R1 and the signature of R1 to the local upgrade authorization request sent to the identity authentication server.

If the query command does not carry a random number, the electronic identification card application may generate a random number R2, and performs signature calculation on R2 to obtain a signature of R2. The local upgrade authorization request carries R2 and the signature of R2.

The information carried in the local upgrade authorization request in step 2041 of the manner 2 is similar to the information carried in the local upgrade authorization request in step 2041 of the manner 1. Details are not described herein again.

2042. The electronic identification card application receives a local upgrade authorization response from the identity authentication server.

Specifically, the identity authentication server verifies the information carried in the local upgrade authorization request. If the verification succeeds, the identity authentication server returns a local upgrade authorization response to the electronic identification card application. If the verification fails, the identity authentication server returns a local upgrade negative response to the electronic identification card application.

Optionally, the electronic identification card application sends a query response to the CA, similar to step 2033 of the manner 2 in FIG. 6A; or forwards the received local upgrade authorization response to the CA, to notify the CA of an authorization result.

The content carried in the local upgrade authorization response in step 2042 of the manner 2 is similar to the content carried in the local upgrade authorization response in step 2042 of the manner 1. Details are not described herein again.

It should be noted that in the manner 2, the electronic identification card application directly sends a message to the identity authentication server or receives a message from the identity authentication server, and it can also be understood that the sent message is generated by the electronic identification card application. Therefore, during specific implementation, alternatively, the electronic identification card application may transparently transmit the generated local upgrade authorization request to the client application CA, the client application CA may send the local upgrade authorization request to the identity authentication server, and then the client application CA receives a response from the identity authentication server.

### Manner 3

The terminal device requests, through the CA, the card wallet application server to send a local upgrade authorization request to the identity authentication server.

A premise may be needed for implementing the manner 3: The electronic identification card application is preconfigured with a certificate of the card wallet application server and a certificate of the identity authentication server (optional), the card wallet application server is preconfigured with a certificate of the trusted security platform, a root certificate of the certification authority CA, and a certificate of the identity authentication server, and the identity authentication server is preconfigured with the certificate of the card wallet application server and the certificate of the trusted security platform (optional).

The manner 3 may be based on the manner 3 in step 203. To be specific, after receiving the query response in step 2033 from the electronic identification card application, the CA starts performing the following step 2041.

As described in the manner 3 in step 203, the query success response carries encrypted data. The encrypted data may be obtained by encrypting one or more of the information about the trusted security platform, the random number R, and the signature of R by the electronic identification card application by using the key (for example, a public key or a symmetric key) of the card wallet application server.

2041. The CA sends the local upgrade authorization request to the card wallet application server.

The local upgrade authorization request carries the encrypted data.

2042. The card wallet application server obtains the encrypted data carried in the local upgrade authorization request, and verifies the information about the trusted security platform after decrypting the encrypted data. Alternatively, after decrypting the encrypted data, the card wallet application server performs secondary encryption on the decrypted data by using a key of the identity authentication server.

Two processing manners in step 2042 are detailed as follows:
(1) The card wallet application server decrypts the encrypted data by using its own key (that is, the key of the card wallet application server), to obtain the information about the trusted security platform and/or the signature of the random number. Then, the card wallet application server verifies the information about the trusted security platform, and verifies the signature of the random number by using the information about the trusted security platform, to obtain a verification result. The verification result is used to indicate whether the trusted security platform is trustworthy.
   If the verification result obtained by the card wallet application server indicates that the information about the trusted security platform is trustworthy, the card wallet application server may send indication information (denoted as indication information #1) to the identity authentication server, where the indication information #1 is used to indicate that the trusted security platform is trustworthy. Otherwise, the card wallet application server may send indication information #2 to the identity authentication server, where the indication information #2 is used to indicate that the trusted security platform is untrustworthy.
   It should be understood that, when the identity authentication server receives the local upgrade authorization request sent by the identity authentication server in the following step 2043 or receives a local upgrade request in the following step 205, the identity authentication server may determine, based on the indication information #1 or the indication information #2, whether to allow the terminal device to upgrade the service application scope of the electronic identification card of the user based on the trusted security platform. If receiving the indication information #1 from the card wallet application server, the identity authentication server agrees to upgrade the service application scope of the electronic identification card based on the trusted security platform on the terminal device. If receiving the indication information #2 from the card wallet application server, the identity authentication server does not agree to upgrade the service application scope of the electronic identification card based on the trusted security platform on the terminal device.
(2) After decrypting the encrypted data, the card wallet application server performs secondary encryption on the decrypted data by using the key of the identity authentication server (for example, the prestored public key corresponding to the public key certificate of the identity authentication server), and sends secondary-encrypted data to the identity authentication server. Then, the identity authentication server decrypts the secondary-encrypted data, verifies the information about the trusted security platform obtained through decryption, and verifies the signature of the random number, to determine whether the trusted security platform is trustworthy and determine whether the local upgrade authorization request is allowed after receiving the local upgrade authorization request.

Optionally, the identity authentication server may alternatively choose to transparently transmit the information carried in the local upgrade request to the identity authentication server, and the identity authentication server decrypts these pieces of information and verifies the decrypted information.

2043. The card wallet application server sends the local upgrade authorization request to the identity authentication server.

If the card wallet application server uses the processing manner (1) in step 2042, the local upgrade authorization request in step 2043 carries the indication information 1 or the indication information 2.

The identity authentication server may directly determine, based on the indication information 1 or the indication information 2, whether to agree to upgrade the service application scope of the electronic identification card based on the trusted security platform provided on the terminal device.

If the card wallet application server uses the processing manner (2) in step 2042, the local upgrade authorization request in step 2043 carries the secondary-encrypted data.

After decrypting the secondary-encrypted data by using the key of the identity authentication server, the identity authentication server verifies the information about the trusted security platform. If the verification succeeds, the identity authentication server agrees to upgrade the service application scope of the electronic identification card based on the trusted security platform provided on the terminal device. If the verification fails, the identity authentication server does not agree to upgrade the service application scope of the electronic identification card.

2044. When the identity authentication server agrees to upgrade the application scope of the electronic identification card based on the trusted security platform provided on the terminal device, the identity authentication server sends a local upgrade authorization response to the card wallet application server.

Alternatively, the identity authentication server returns a local upgrade authorization response to the terminal device (for example, the client application CA), and the terminal device forwards the local upgrade authorization response to the card wallet application server, as shown in step 2045 marked in FIG. 7B.

Optionally, steps 2043 and 2044 may alternatively not be performed, but the card wallet application server decrypts the encrypted data sent by the terminal device and directly verifies the decrypted data; and if the verification succeeds, directly authorizes local upgrade permission to the terminal device. In this case, the card wallet application server needs to negotiate with the identity authentication server in advance. To be specific, during implementation, a card wallet application service provider and an identity authentication service provider first cooperate with each other, to provide permission to the card wallet application service provider, so that the card wallet application service provider acts as an agent to verify the trusted security platform on the terminal device and provides the local upgrade permission.

It should be noted that the random numbers and the signatures of the random numbers included in step 203 and 204 are used in the implementations, and can prevent a replay attack to some extent. Certainly, the random numbers may alternatively be replaced with other information, for example, a count value of a quantity of interactions between the CA and the TA.

Steps 201 to 204 describe the process in which the terminal device applies to the identity authentication server for the permission to upgrade the application scope of the electronic identification card based on the locally provided trusted security platform and then obtains the authority. The following steps 205 to 209 are a process for upgrading the service application scope of the electronic identification card based on obtaining of the permission to upgrade the service application scope of the electronic identification card based on the trusted security platform.

205. The terminal device generates upgrade information required to upgrade the service application scope of the electronic identification card, and sends the upgrade information to the identity authentication server.

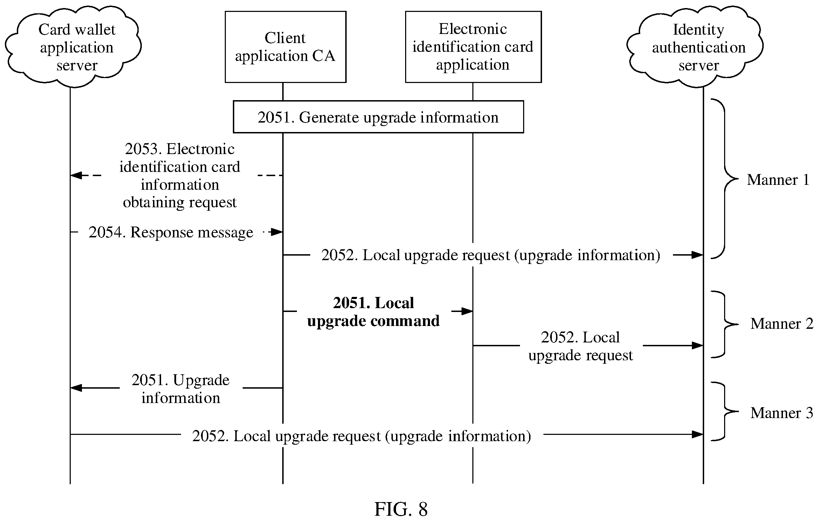

Step 205 is implemented in a plurality of manners shown in FIG. 8.

FIG. 8 is a schematic diagram illustrating that a terminal device generates upgrade information and sending the upgrade information to an identity authentication server.

### Manner 1

2051. The CA sends a local upgrade command to the electronic identification card application, where the local upgrade command is used to request the electronic identification card application to generate upgrade information.

In this application, the upgrade information includes at least face image information and physical identification card information of the user.

In an optional implementation, the local upgrade command may carry some information of the upgrade information. In this case, the CA may generate some information of the upgrade information on the REE side, and obtain some other information of the upgrade information from the electronic identification card application.

For example, the CA obtains the face image information from the REE side, and obtains the physical identification card information from the electronic identification card application. Alternatively, the CA obtains the physical identification card information from the REE side, and obtains the face image information from the electronic identification card application. Specifically, the CA may generate some information of the upgrade information on the REE side, and send the local upgrade command to the electronic identification card application, where the local upgrade command is used to request the electronic identification card application to generate some other information of the upgrade information (and perform encryption or signing processing on all the upgrade information). In response to the local upgrade command, the electronic identification card application generates the some other information, requested by the CA, of the upgrade information; and feeds back a local upgrade command response to the CA after generating the some other information of the upgrade information, where the local upgrade command response carries the some other information of the upgrade information.

Optionally, the CA and the electronic identification card application may separately perform encryption or signing processing on the partial upgrade information that is respectively obtained by the CA and the electronic identification card application. For example, the CA encrypts, by using the public key or the symmetric key of the identity authentication server, the partial upgrade information obtained by the CA; and the electronic identification card application performs signing processing, by using the private key of the trusted security platform, the partial upgrade information obtained by the electronic identification card application. In addition, the electronic identification card application may alternatively perform encryption or signing processing on all the upgrade information.

In another optional implementation, the local upgrade command may not carry any upgrade information; in this case, the electronic identification card application needs to obtain all the upgrade information, and returns all the upgrade information to the CA by using a local upgrade response. For example, the electronic identification card application may read the physical identification card information through near field communication (near field communication, NFC), or receive, by using a user interface (user interface, UI), the physical identification card information entered by the user, or identify the physical identification card information by using a photograph uploaded by the user; and collect the face image information in real time by using a camera on the terminal device.

Optionally, the electronic identification card application performs encryption processing or signing processing on the read physical identification card information of the user and/or the collected face image information of the user. For example, the electronic identification card application may perform signing processing on the face image information and/or the physical identification card information by using the private key or a symmetric key of the trusted security platform. Alternatively, the electronic identification card application performs encryption processing on the face image information and/or the physical identification card information by using the public key or the symmetric key of the identity authentication server.

2052. The CA sends a local upgrade request to the identity authentication server, where the local upgrade request carries the upgrade information.

Optionally, the upgrade information further includes electronic identification card information. Alternatively, the upgrade information further includes electronic identification card information and an identifier of a current service application scope corresponding to the electronic identification card.

The electronic identification card information (which may include the electronic identification card and the identifier of the current service application scope corresponding to the electronic identification card) may be obtained from the terminal device locally, or obtained from the card wallet application server. For example, if the electronic identification card information is stored in the terminal device (for example, specifically on the trusted security platform), the electronic identification card information can be obtained directly. If the electronic identification card information is stored on the card wallet application server side, the electronic identification card information needs to be obtained by using the following steps 2053 and 2054 before step 2052 is performed.

2053. The CA sends an electronic identification card information obtaining request to the card wallet application server.

The electronic identification card information obtaining request is used to request to obtain the current electronic identification card information of the user from the card wallet application server.

2054. The CA receives a response message from the card wallet application server, and obtains the electronic identification card information from the response message.

Optionally, the upgrade information may further include identification information of the terminal device. The identification information of the terminal device may help the identity authentication server determine a result of the local upgrade authorization that is applied for by using steps 201 to 204, and may further be used to determine the certificate of the trusted security platform on the terminal device, or may be used to perform association verification on the electronic identification card information.

It should be noted that the obtained electronic identification card information (and the current service application scope corresponding to the electronic identification card information) is used to obtain confirmation from the identity authentication server that the current upgrade operation is performed for the electronic identification card, to ensure that the service application scope of the specified electronic identification card can be upgraded in some cases (for example, a user registers a plurality of electronic identification cards on one terminal device, or a plurality of users respectively register electronic identification cards on a same terminal device).

### Manner 2

The electronic identification card application generates upgrade information (that is, all information included in the upgrade information). After generating the upgrade information, the electronic identification card application directly sends a local upgrade request to the identity authentication server.

The local upgrade request carries the upgrade information.

2051. The CA sends a local upgrade command to the electronic identification card application, where the local upgrade command is used to request the electronic identification card application to generate the upgrade information.

In the manner 2, content carried in the local upgrade command is the same as that carried in the local upgrade command in step 2051 of the manner 1. Details are not described herein again.

The manner 2 is different from the manner 1 in that, the electronic identification card application may not return a local upgrade response to the CA, or a returned local upgrade response does not include all or some of the upgrade information in the manner 1.

2052. The electronic identification card application sends the local upgrade request to the identity authentication server, where the local upgrade request carries the upgrade information.

Optionally, if the electronic identification card application performs signing processing on face image information and/or physical identification card information in step 2052, the local upgrade request further carries signature information. Alternatively, if the electronic identification card application performs encryption processing on face image information and/or physical identification card information, the upgrade information carried in the local upgrade request is data obtained through encryption processing.

Optionally, the upgrade information further includes electronic identification card information. Alternatively, the upgrade information further includes electronic identification card information and an identifier of a current service application scope corresponding to the electronic identification card. The information included in the upgrade information may specifically be obtained by the client application CA from the card wallet application server before step 2051 of the manner 2. This is similar to steps 2053 and 2054 of the manner 1. Details are not described herein again.

### Manner 3

The CA sends upgrade information to the card wallet application server, and the card wallet application server sends a local upgrade request to the identity authentication server.

2051. The CA sends the face image information and the physical identification card information that are obtained in the manner 1 to the card wallet application server. Alternatively, in the manner 2, the electronic identification card application sends the encapsulated upgrade information to the CA, and then the CA sends the upgrade information to the card wallet application server.

Optionally, in the manner 2, before sending the face image information and the physical identification card information to the CA, the electronic identification card application may perform encryption processing on the face image information and/or the physical identification card information by using the public key or the symmetric key of the card wallet application server.

2052. The card wallet application server sends the local upgrade request to the identity authentication server, where the local upgrade request carries the upgrade information.

The upgrade information is used by the identity authentication server to upgrade the service application scope of the electronic identification card.

Optionally, in step 2052, the card wallet application server may transparently transmit the upgrade information to the identity authentication server directly. Alternatively, the card wallet application server may verify the face image information and the physical identification card information, and sends a verification result to the identity authentication server.

It should be noted that in the foregoing manners, at least one of the face image information and the physical identification card information cannot be obtained by the CA from the REE side. The face image information and the physical identification card information are subsequently sent to the identity authentication server for verification. If a user indicated by the face image information and a user indicated by the physical identification card information are a same user, the verification succeeds, and then the identity authentication server upgrades the service application scope of the electronic identification card. Otherwise, if the verification fails, upgrading is not performed. As described above, security of the REE is poorer than that of the TEE, and consequently security of a common application (that is, the client application CA) running in the REE cannot be ensured. Therefore, verification reliability can be improved only when at least one piece of the upgrade information is not obtained from the REE side.

It should be noted that if the card wallet application server sends the local upgrade request to the identity authentication server, steps 2053 and 2054 of the manner 1 can be omitted. In other words, the CA sends the obtained face image information and physical identification card information to the card wallet application server. The card wallet application server encapsulates the face image information and the physical identification card information, together with electronic identification card information, into the local upgrade request, and sends the encapsulated local upgrade request to the identity authentication server. The CA does not need to obtain the electronic identification card information from the card wallet application server.

206. The identity authentication server verifies the upgrade information; and when the verification succeeds, upgrades the service application scope of the electronic identification card.

Specifically, the identity authentication server verifies whether the user indicated by the face image information and the user indicated by the physical identification card information are a same user. If the users indicated by the face image information and the physical identification card information are a same user, the identity authentication server upgrades the current service application scope of the electronic identification card of the user.

After upgrading the service application scope of the electronic identification card of the user, the identity authentication server may send a local upgrade success response to the terminal device.

Optionally, if the manner 1 or 2 is used in step 205, and the upgrade information, that is, the face image information and/or the physical identification card information, is signature information obtained through signing by using the key (for example, the private key or the symmetric key) of the trusted security platform, the identity authentication server first needs to verify the signature information by using the key (for example, a public key or the symmetric key) of the trusted security platform, to verify the face image information and/or the physical identification card information. Alternatively, if the manner 3 is used in step 205, the card wallet application server transmits, to the identity authentication server, the encrypted data that is obtained after encryption processing is performed by using the key (for example, the public key) of the identity authentication server. The identity authentication server needs to decrypt the encrypted data (for example, decrypt the encrypted data by using a private key of the identity authentication server), and then verify the face image information and the physical identification card information. Alternatively, if the manner 3 is used in step 205, the card wallet application server has verified the face image information and/or the physical identification card information, and directly sends a verification result to the identity authentication server. In this case, the identity authentication server may determine, based on the verification result from the card wallet application server, whether to upgrade the service application scope of the electronic identification card. If the verification result indicates that the verification succeeds, the identity authentication server upgrades the service application scope of the electronic identification card of the user. If the verification result indicates that the verification fails, the identity authentication server does not upgrade the service application scope of the electronic identification card of the user. Further, when the verification fails, the identity authentication server may return upgrade failure information to the terminal device.

207. The identity authentication server sends an upgrade notification to the card wallet application server or the terminal device.

For example, when the CA or the TA of the terminal device sends the local upgrade request (that is, the upgrade information) to the identity authentication server, the identity authentication server returns the upgrade notification to the terminal device. Optionally, the terminal device then forwards the upgrade notification to the card wallet application server, and the card wallet application server updates and stores an identifier of an upgraded service application scope. Alternatively, when the terminal device sends the local upgrade request to the identity authentication server through the CArd wallet application server, or when the local upgrade request sent by the CA or the TA of the terminal device to the identity authentication server carries identification information of the card wallet application server (for example, a name or a uniform resource locator (uniform resource locator, URL) of the card wallet application server), after the identity authentication server completes upgrading of the service application scope of the electronic identification card, the identity authentication server directly sends the upgrade notification to the card wallet application server. The upgrade notification is used to instruct the card wallet application server to update the service application scope of the electronic identification card of the user.

The upgrade notification carries the identifier of the upgraded service application scope.

Optionally, when the local upgrade request carries the electronic identification card information of the user and/or the identifier of the terminal device, the identity authentication server associates the identifier of the upgraded service application scope with the electronic identification card information and/or the identifier of the terminal device.

208. The card wallet application server updates the service application scope of the electronic identification card of the user from a first service application scope to a second service application scope.

The first service application scope is the service application scope before upgrading, and the second service application scope is the service application scope obtained after upgrading is completed. The second service application scope is broader than the first service application scope.

Step 207-208: The identity authentication server may directly send the upgrade notification to the card wallet application server, to instruct the card wallet application server to update the service application scope of the electronic identification card.

In addition, after receiving the upgrade notification from the identity authentication server, the terminal device may update the service application scope of the electronic identification card of the user synchronously. For example, the CA or the electronic identification card application updates the service application scope of the electronic identification card by updating the UI, as shown in step 209 in FIG. 2B.

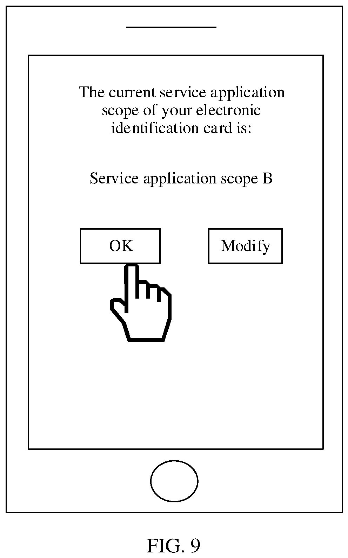

FIG. 9 is a schematic diagram of still another user interface UI for performing a management operation on an electronic identification card. As shown in FIG. 9, after receiving the upgrade notification from the identity authentication server, the CA displays prompt information to the user, to indicate the service application scope of the electronic identification card after the upgrade is completed. For example, the CA displays "Current service application scope of the electronic identification card is a service application scope B" on the management screen, and provides "determine" and "modify" buttons on the management screen. If the CA detects that the user taps the "determine" button, the CA records the service application scope B as the current service application scope of the electronic identification card of the user. Alternatively, if the CA detects that the user taps the "modify" button, the CA returns to the management screen shown in FIG. 3 for presentation for the user, to prompt the user to reselect a service application scope needed by the user, and the like. Certainly, alternatively, after the upgrading succeeds, an entry for reconfirmation may not be presented to the user, but the UI is used to notify the user that the service application scope of the electronic identification card has been successfully upgraded and notify a level of the upgraded service application scope or specific applicable services.

Optionally, the electronic identification card application may alternatively provide the management screen described in step 208 and in this specification, and correspondingly, the electronic identification card application may also update the record of the upgraded service application scope.

The foregoing describes the procedure, proposed in this application, for upgrading the service application scope of the electronic identification card of the user based on the locally provided trusted security platform.

As described above, service application scopes of electronic identification cards differ from each other. If a user wants to broaden a service application scope to which an electronic identification card of the user can be applicable, to use the electronic identification card to handle more services, the user can upgrade the service application scope of the electronic identification card of the user by using the method described in the scenario 1. For example, before upgrading, the electronic identification card of the user can handle only hotel check-in and ticket purchase services. After the upgrading, in addition to hotel check-in and ticket purchase, the electronic identification card of the user can further handle services such as business registration and securities account registration.

In another scenario, if a user has no electronic identification card, when the user applies for an electronic identification card, the user applies for an electronic identification card with a target service application scope. For example, if the user wants to apply for an electronic identification card that can be used for services such as business registration and securities account registration, the user can directly apply for an electronic identification card with this service application scope. This scenario is a scenario 2 described as follows:

### Scenario 2

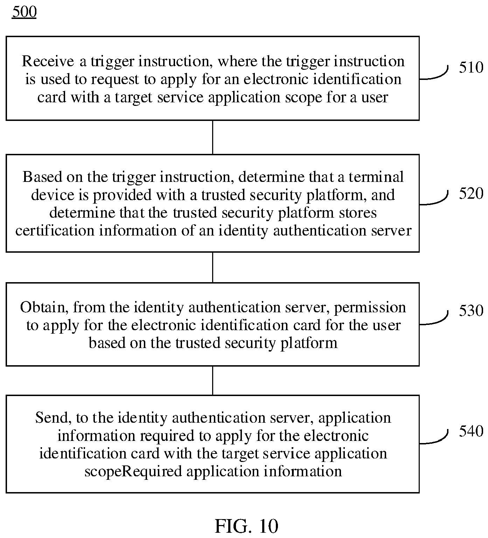

FIG. 10 is a flowchart of a method for applying for an electronic identification card according to this application.

510. A terminal device receives a trigger instruction.

The trigger instruction is used to request to apply for an electronic identification card with a target service application scope for a user. The target service application scope is a service application scope selected by the user for the electronic identification card applied for by the user.

An electronic identification card application may divide service scopes to which electronic identification cards can be applicable into a plurality of levels, where each level is corresponding to one service application scope. A broader service application scope may cover a narrower service application scope. When a user applies for an electronic identification card, the user selects, based on a service requirement, a proper service application scope for the electronic identification card to be applied for. Certainly, the target service application scope may be by default, or may be determined by the terminal device based on whether a trusted security platform is provided locally. If the terminal device determines that no trusted security platform exists locally in a subsequent procedure, the target service application scope is at a lowest level; otherwise, a level of the target service application scope is higher than the lowest level.

In step 510, for the process in which the terminal device receives the trigger instruction, refer to step 201 in the scenario 1. Using FIG. 3 as an example, a user selects "apply for an electronic identification card" on a management screen provided on the electronic identification card application, to handle an "apply for an electronic identification card" service. The terminal device receives the trigger instruction by detecting a tapping operation of the user, to trigger a service procedure for applying an electronic identification card for the user. Further, after detecting the trigger instruction of the user, the terminal device may present a prompt screen to the user for the user to select a service application scope of an electronic identification card. The terminal device determines, by detecting the user operation, a target service application scope selected by the user, to directly apply for the electronic identification card with the target service application scope for the user based on a trusted security platform.

Herein, obtaining the tapping operation of the user is merely used as an example of receiving the trigger instruction by the terminal device, and a person skilled in the art may alternatively receive (or detect) the trigger instruction of the user by using an existing technical means.

It should be noted that in the scenario 1, the trigger instruction is used to trigger upgrading of the service application scope of the electronic identification card; in the scenario 1, the trigger instruction is used to trigger application for the electronic identification card with the target service application scope.

520. Based on the trigger instruction, the terminal device determines that the terminal device is provided with a trusted security platform, and determines that the trusted security platform stores certification information of an identity authentication server.

For step 520, refer to step 220 in the scenario 1. Details are not described herein again.

530. The terminal device obtains, from the identity authentication server, permission to apply for the electronic identification card with the target service application scope for the user based on the trusted security platform.

When determining that the trusted security platform stores the certification information of the identity authentication server, the terminal device applies to the identity authentication server for the permission to apply for the electronic identification card with the target service application scope for the user based on the trusted security platform. After obtaining the approval of the identity authentication server, the terminal device obtains the permission.

For example, a CA running in an REE on the terminal device requests, by using step 520, the electronic identification card application to query whether the electronic identification card application stores the certification information of the identity authentication server. After receiving a query success response returned by the electronic identification card application, the CA sends a local application authorization request to the identity authentication server. The local application authorization request is used to request the identity authentication server to allow applying for the electronic identification card with the target service application scope for the user based on the trusted security platform.

The local application authorization request carries information about the trusted security platform. Optionally, the local application authorization request further carries a random number R and a signature of R. Further, the local application authorization request may further carry information such as identification information of the terminal device.

Herein, one or more of the information about the trusted security platform, R, and the signature of R may be data obtained after encryption processing is performed by using a key (for example, a public key or a symmetric key) of the identity authentication server.

The identity authentication server verifies the information carried in the local application authorization request, to determine whether the local application authorization is allowed. If the verification succeeds, the identity authentication server agrees to apply for the electronic identification card for the user based on the trusted security platform provided on the terminal device. If the verification fails, the identity authentication server does not agree to apply for the electronic identification card for the user based on the trusted security platform. For a verification process, refer to the descriptions in the scenario 1.

When the verification succeeds, the identity authentication server returns a local application authorization response to the terminal device, and in this case, the terminal device obtains the permission to apply for the electronic identification card for the user based on the trusted security platform.

540. The terminal device sends, to the identity authentication server, application information required to apply for the electronic identification card, so that the identity authentication server generates the electronic identification card with the target service application scope for the user based on the application information.

The application information is used by the identity authentication server to verify the user and generate the electronic identification card with the target service application scope for the user.

In the scenario 2, the application information includes at least face image information and physical identification card information of the user. Further, some or all information of the application information may be data obtained through signing processing by using a key of the trusted security platform, and/or data obtained after encryption processing is performed by using the key of the identity authentication server. Optionally, the application information may further include the identification information of the terminal device, information about a local application authorization result, and the like. The scenario 2 is different from the scenario 1 in that, the application information does not include electronic identification card information.

For the process in which the terminal device sends the application information to the identity authentication server, refer to the process in which the terminal device sends the upgrade information to the identity authentication server in the scenario 1.

The identity authentication server verifies the application information. If the verification succeeds, the identity authentication server generates the electronic identification card with the target service application scope for the user. Further, the identity authentication server delivers the generated electronic identification card to the trusted security platform on the terminal device for storage.

According to the method described in the scenario, the terminal device applies to the identity authentication server for the permission to apply for the electronic identification card with the target service application scope for the user based on the trusted security platform provided on the terminal device, to apply for the electronic identification card with the target service application scope for the user based on the trusted security platform. In this way, the user can directly apply for an electronic identification card with a relatively broad service application scope, and no longer needs to use a trusted handling terminal deployed at a fixed site. This can reduce deployment costs, and can be convenient for the user.

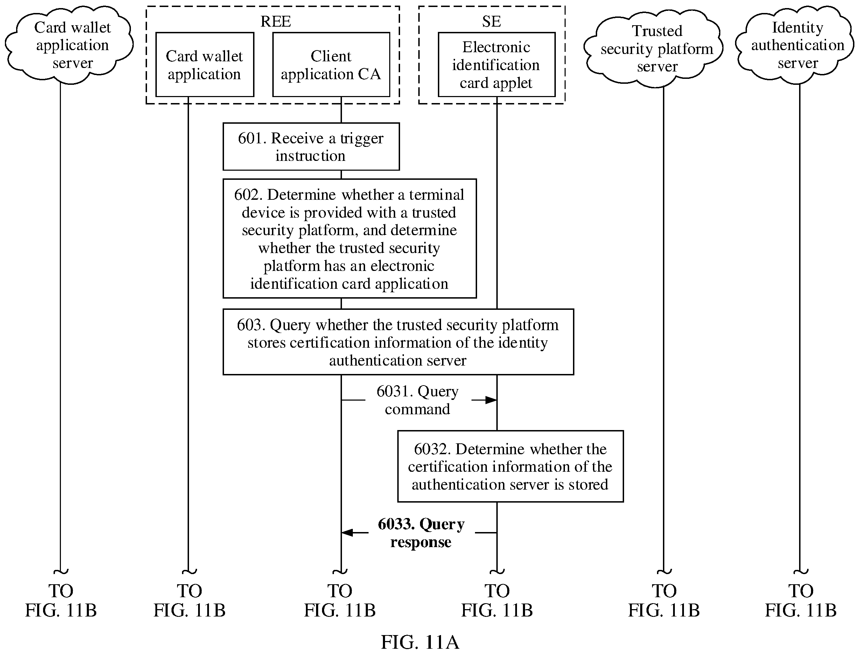

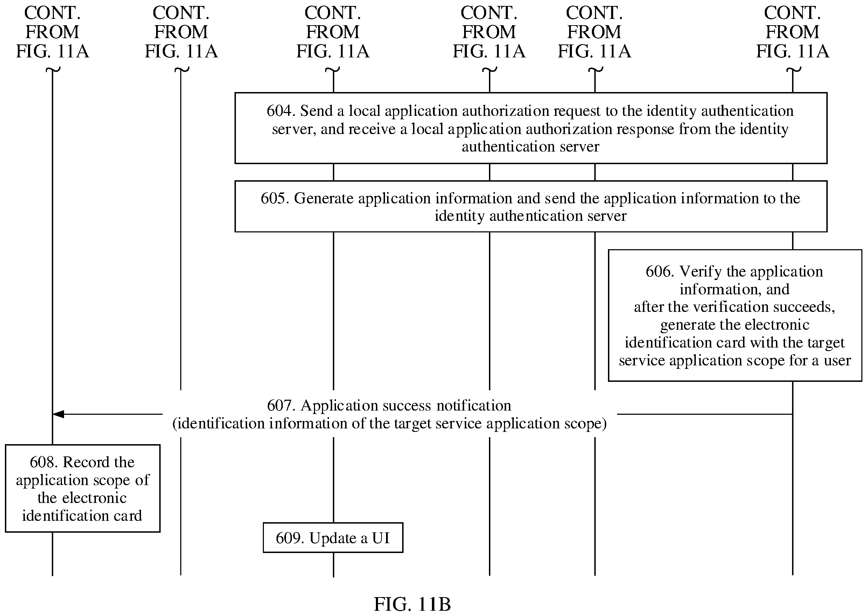

With reference to FIG. 11A and FIG. 11B, the following provides an example of applying for an electronic identification card for a user by a terminal device based on a trusted security platform.

FIG. 11A and FIG. 11B are a schematic diagram illustrating that a terminal device applies for an electronic identification card based on a trusted security platform according to this application.

601. A terminal device receives a trigger instruction through a client application CA in a rich execution environment REE, where the trigger instruction is used to request to apply for an electronic identification card with a target service application scope for a user.

Specifically, the CA running in the REE on the terminal device may provide the user with an entry for managing electronic identification card-related information of the user. When the user has not registered an electronic identification card, the user enables the CA to enter an electronic identification card management screen. Electronic identification card management includes applying for an electronic identification card and applying for subsequent management of the electronic identification card, for example, upgrading a service application scope of the applied-for electronic identification card depending on a requirement.

For the management screen provided on the CA, refer to step 201 in the scenario 1.

602. Based on the trigger instruction, the CA determines that the terminal device is locally provided with a trusted security platform, and determines whether the trusted security platform has an electronic identification card application.

For step 602, refer to step 202 in the scenario 1. Details are not described herein again.

603. The terminal device queries whether the trusted security platform stores certification information of an identity authentication server.

In the scenario 2, for querying, by the terminal device, whether the trusted security platform stores certification information of an identity authentication server, refer to the descriptions in the scenario 1. Details are not described herein again.

604. The terminal device sends a local application authorization request to the identity authentication server, and receives a local application authorization response from the identity authentication server.

In the scenario 2, sending a local application authorization request by the terminal device to the identity authentication server is similar to sending a local upgrade authorization request by the terminal device to the identity authentication server described in the scenario 1. In the scenario 2, receiving a local application authorization response by the terminal device from the identity authentication server is similar to receiving a local upgrade authorization response by the terminal device from the identity authentication server in the scenario 1. For details, refer to various implementations in the scenario 1.

For example, the CA on the terminal device sends the local application authorization request to the identity authentication server, where the local application authorization request carries information about the trusted security platform. Optionally, the information about the trusted security platform may be encrypted data obtained by performing an encryption operation by the electronic identification card application by using a key of the identity authentication server.

Optionally, local application authorization information further carries a random number R and a signature of R. R and the signature of R may be encrypted data obtained by performing an encryption operation by using the key of the identity authentication server.

Correspondingly, the identity authentication server receives the local application authorization request, and verifies the information about the trusted security platform carried in the local application authorization request. If the information about the trusted security platform is encrypted data obtained after encryption processing is performed by using the key of the identity authentication server, the identity authentication server first decrypts the encrypted data by using a private key of the identity authentication server; and then verifies, by using a locally preconfigured root certificate of a certification authority CA, the information about the trusted security platform obtained through decryption.

Similarly, if the local application authorization request further carries R and the signature of R, the identity authentication server verifies the signature of R by using the information about the trusted security platform. For a verification process, refer to the scenario 1. Details are not described herein again.

605. The terminal device generates application information required to apply for the electronic identification card with the target service application scope, and sends the application information to the identity authentication server.

Similar to the process, described in the scenario 1, of generating the upgrade information by the terminal device, in the scenario 2, the application information may be jointly generated by the CA and the electronic identification card application, or may be generated by the electronic identification card application independently. For the former case, at least one of the generated application information is obtained from the electronic identification card application. To be specific, the application information cannot be generated entirely by the CA on the REE side, and at least one of face image information or physical identification card information comes from the electronic identification card application.

As described in step 540, the application information includes at least the face image information and the physical identification card information of the user.

Specifically, the terminal device may send the application information to the identity authentication server in a plurality of manners. For example, after generating the application information, the CA sends a local application request to the identity authentication server, where the local application request carries the application information. Alternatively, the CA sends a local application command to the electronic identification card application; and the electronic identification card application generates the application information (including the face image information and the physical identification card information), and sends a local application request to the identity authentication server, where the local application request carries the application information. Optionally, the application information may further include signature information, and the signature information is obtained by the electronic identification card application by performing signing processing on one or more of the face image information and the physical identification card information by using a key of the trusted security platform. Optionally, the application information may further include identification information of the target service application scope. Alternatively, after generating the application information, the CA sends a local application request to a card wallet application server, where the local application request carries the application information. Optionally, the card wallet application server may verify the application information, and then send a verification result to the identity authentication server. Alternatively, the card wallet application server may transparently transmit the local application request to the identity authentication server. For a manner of processing the application information by the card wallet application server, refer to the manner of processing the upgrade information by the card wallet application server in the scenario 1.

606. The identity authentication server verifies the application information; and when the verification succeeds, generates the electronic identification card with the target service application scope for the user.

Specifically, the identity authentication server verifies whether a user indicated by the face image information and a user indicated by the physical identification card information are a same user. If the users indicated by the face image information and the physical identification card information are a same user, the identity authentication server generates the electronic identification card with the target service application scope for the user. If the users indicated by the face image information and the physical identification card information are not a same user, the identity authentication server returns a rejection message to the terminal device, where the rejection message is used to indicate that the identity authentication server rejects registration and delivery of the electronic identification card for the user.

Optionally, as described in step 605, if the application information includes the signature information that is obtained by the electronic identification card application by performing signing processing on the face image information and/or the physical identification card information by using the key (for example, a private key or a symmetric key) of the trusted security platform, the identity authentication server verifies the signature information by using the preconfigured key (for example, a public key or the symmetric key) of the trusted security platform.

607. The identity authentication server sends an application success notification to the terminal device or the card wallet application server.

For example, when the CA or a TA of the terminal device sends the local application request to the identity authentication server, the identity authentication server returns the application success notification to the terminal device. The application success notification is used to indicate that the electronic identification card of the user has been successfully applied for, and the application success notification carries the electronic identification card generated by the identity authentication server for the user and the identification information of the service application scope of the electronic identification card.

Optionally, when the local application request sent by the terminal device to the identity authentication server carries an identifier of the terminal device, the identity authentication server associates the electronic identification card of the user and the identification information of the service application scope of the electronic identification card with the identifier of the terminal device.

The CA receives the application success notification, stores the electronic identification card information, and records the service application scope of the electronic identification card. The CA may further notify, by using the management screen, the user that the electronic identification card has been successfully applied for, and provide the user with a function of viewing the service application scope of the electronic identification card that has been applied for.

Alternatively, the local application request sent by the CA or the TA of the terminal device to the identity authentication server may further carry identification information of the card wallet application server (for example, a name or a URL of a card wallet application), so that the identity authentication server directly sends the application success notification to the card wallet application server. The application success notification carries the electronic identification card and the identification information of the service application scope of the electronic identification card.

608. The card wallet application server records the service application scope of the electronic identification card of the user.

After receiving the application success notification, the card wallet application server records the electronic identification card information and the service application scope of the electronic identification card of the user.

The scenario 2 is similar to the scenario 1 in that, the CA or the electronic identification card application may also record, by updating a UI, the service application scope of the electronic identification card that has been applied for the user, as shown in step 609 in FIG. 11B. Details are not described herein again.

Step 608 is optional. In other words, in the scenario 2, the electronic identification card and the service application scope of the electronic identification card are recorded only on the terminal device side, and do not need to be recorded on the card wallet server side.

By using the method described in the scenario 2, the terminal device can apply for the electronic identification card with the target service application scope for the user based on the trusted security platform provided on the terminal device.

In the scenario 1 and the scenario 2, electronic identification cards with relatively broad service application scopes can be applied for respectively at different stages for a user. In the scenario 1, at a stage at which the user already has an electronic identification card, a relatively narrow service application scope of the electronic identification card is upgraded, so that the service application scope of the electronic identification card is broadened. In the scenario 2, at a stage at which the user has no electronic identification card, an electronic identification card with a relatively broad target service application scope is directly applied for, for the user.

The following describes an apparatus for upgrading a service application scope of an electronic identification card and an apparatus for applying for an electronic identification card that are provided in this application.

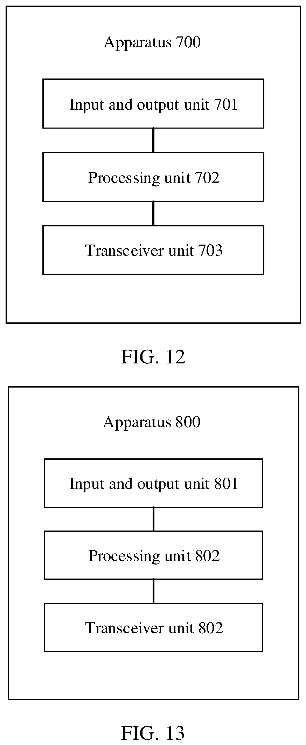

FIG. 12 is a block diagram of an apparatus 700 for upgrading a service application scope of an electronic identification card according to this application. The apparatus 700 includes an input and output unit 701, a processing unit 702, and a transceiver unit 703.

The input and output unit 701 is configured to receive a trigger instruction, where the trigger instruction is used to request to upgrade a service application scope of an electronic identification card of a user;
the processing unit 702 is configured to: based on the trigger instruction received by the input and output unit 701, determine that the apparatus 700 is provided with a trusted security platform, and determine that the trusted security platform stores certification information of an identity authentication server;
the processing unit 702 is further configured to obtain, from the identity authentication server, permission to upgrade the service application scope of the electronic identification card based on the trusted security platform;
the processing unit 702 is further configured to generate upgrade information required to upgrade the service application scope of the electronic identification card; and
the transceiver unit 703 is configured to send the upgrade information generated by the processing unit 702 to the identity authentication server, so that the identity authentication server upgrades the service application scope of the electronic identification card based on the upgrade information.

Optionally, the processing unit 702 is further configured to: before determining that the trusted security platform stores the certification information of the identity authentication server, determine that the trusted security platform has an electronic identification card application; or
a determining unit 702 is further configured to: when determining that the trusted security platform has no electronic identification card application, download and install an electronic identification card application to the trusted security platform.

Optionally, the trusted security platform is a trusted execution environment TEE, and the electronic identification card application is a trusted application TA in the TEE; or the trusted security platform is a secure element SE, and the electronic identification card application is a security application in the SE.

Optionally, the upgrade information includes face image information and physical identification card information of the user, the processing unit 702 is configured to generate the upgrade information through a client application CA in an REE, and the transceiver unit 703 is configured to send the upgrade information generated by the CA to the identity authentication server, where at least one piece of the upgrade information is obtained by the CA from the electronic identification card application; or
the processing unit 702 is configured to request, through the CA, the electronic identification card application to generate the upgrade information, and the transceiver unit 703 is configured to send the upgrade information generated by the electronic identification card application to the identity authentication server.

Optionally, the upgrade information further includes signature information, and the signature information is information obtained by the electronic identification card application by performing signing processing on at least one of the face image information and the physical identification card information by using a key of the trusted security platform.

Optionally, the upgrade information further includes electronic identification card information, or the upgrade information further includes electronic identification card information and identification information of the service application scope corresponding to the electronic identification card information.

Optionally, the upgrade information is information obtained after encryption processing is performed by using a key of the identity authentication server.

Optionally, the processing unit 702 is configured to send a query command to the trusted security platform through the CA in the REE, where the query command is used to request to query whether the trusted security platform stores the certification information of the identity authentication server, and the query command carries information that can represent an identity of the identity authentication server; and
the processing unit 702 is configured to receive a query success response from the trusted security platform through the CA, where the query success response is used to indicate that the trusted security platform stores the certification information of the identity authentication server.

Optionally, the query success response carries information that can indicate a certificate of the trusted security platform, and the transceiver unit 703 is configured to send a local upgrade authorization request to the identity authentication server, where the local upgrade authorization request carries the information that can indicate the certificate of the trusted security platform; and
the transceiver unit 703 is further configured to receive an authorization response message returned by the identity authentication server, where the authorization response message is used to indicate that the identity authentication server allows upgrading the service application scope of the electronic identification card based on the trusted security platform.

Optionally, the transceiver unit 703 is further configured to send the local upgrade authorization request to the identity authentication server through the CA, and the transceiver unit 703 is further configured to receive, through the CA, the authorization response message returned by the identity authentication server; or
the transceiver unit 703 is further configured to send the local upgrade authorization request to the identity authentication server through the electronic identification card application, and the transceiver unit 703 receives the authorization response message from the identity authentication server through the electronic identification card application.

Optionally, the local upgrade authorization request further carries a random number and a signature of the random number, where the signature of the random number is obtained by the trusted security platform by performing signature calculation on the random number by using the key of the trusted security platform; and the random number is generated by the trusted security platform, or is sent by the CA to the trusted security platform by using the query command.

Optionally, at least one of the information that can indicate the certificate of the trusted security platform, the random number, and the signature of the random number is information obtained after encryption processing is performed by using the key of the identity authentication server.

It should be understood that the apparatus 700 may be corresponding to the method 100 for upgrading a service application scope of an electronic identification card and the terminal device described in the corresponding embodiments. For example, the apparatus 700 may be the terminal device in the method 100 and the corresponding embodiments, or may be a chip configured in the terminal device. The units in the apparatus 700 are configured to perform the method 100 and the operations and/or processing procedures performed by the terminal device in the corresponding embodiments. To avoid repetition, detailed descriptions thereof are omitted.

FIG. 13 is a block diagram of an apparatus 800 for applying for an electronic identification card according to this application. The apparatus 800 includes an input and output unit 801, a processing unit 802, and a transceiver unit 803.

The input and output unit 801 is configured to receive a trigger instruction, where the trigger instruction is used to request to apply for an electronic identification card with a target service application scope for a user;
the processing unit 802 is configured to: based on the trigger instruction received by the input and output unit 801, determine that the apparatus 800 is provided with a trusted security platform, and determine that the trusted security platform stores certification information of an identity authentication server;
the processing unit 802 is further configured to obtain, from the identity authentication server, permission to apply for the electronic identification card based on the trusted security platform;
the processing unit 802 is further configured to generate application information required to apply for the electronic identification card with the target service application scope; and
the transceiver unit 803 is configured to send the application information generated by the processing unit 802 to the identity authentication server, so that the identity authentication server generates the electronic identification card with the target service application scope for the user based on the application information.

Optionally, the processing unit 802 is further configured to: before determining that the trusted security platform stores the certification information of the identity authentication server, determine that the trusted security platform has an electronic identification card application; or
the processing unit 802 is further configured to: when determining that the trusted security platform has no electronic identification card application, download and install an electronic identification card application to the trusted security platform.

Optionally, the trusted security platform is a trusted execution environment TEE, and the electronic identification card application is a trusted application TA in the TEE; or the trusted security platform is a secure element SE, and the electronic identification card application is a security application in the SE.

Optionally, the application information includes face image information and physical identification card information of the user, the processing unit 802 is configured to generate the application information through a client application CA in an REE, and the transceiver unit 803 is configured to send the application information generated by the CA to the identity authentication server, where at least one piece of the application information is obtained by the CA from the electronic identification card application; or
the processing unit 802 is configured to request, through the CA, the electronic identification card application to generate the application information, and the transceiver unit 803 is configured to send the application information generated by the electronic identification card application to the identity authentication server.

Optionally, the application information further includes signature information, and the signature information is information obtained by the electronic identification card application by performing signing processing on at least one of the face image information and the physical identification card information by using a key of the trusted security platform.

Optionally, the application information further includes identification information of the target service application scope.

Optionally, the application information is information obtained after encryption processing is performed by using a key of the identity authentication server.

Optionally, the processing unit 802 is configured to send a query command to the trusted security platform through the CA in the REE, where the query command is used to request to query whether the trusted security platform stores the certification information of the identity authentication server, and the query command carries information that can represent an identity of the identity authentication server; and
the processing unit 802 is further configured to receive a query success response from the trusted security platform through the CA, where the query success response is used to indicate that the trusted security platform stores the certification information of the identity authentication server.

Optionally, the query success response carries information that can indicate a certificate of the trusted security platform, and
the transceiver unit 803 is configured to send a local application authorization request to the identity authentication server, where the local application authorization request carries the information that can indicate the certificate of the trusted security platform; and
the transceiver unit 803 is further configured to receive an authorization response message returned by the identity authentication server, where the authorization response message is used to indicate that the identity authentication server allows applying for the electronic identification card with the target service application scope for the user based on the trusted security platform.

Optionally, the transceiver unit 803 sends the local application authorization request to the identity authentication server through the CA, and the transceiver unit 803 is further configured to receive, through the CA, the authorization response message returned by the identity authentication server; or
the transceiver unit 803 is configured to send the local application authorization request to the identity authentication server through the electronic identification card application, and the transceiver unit 803 is further configured to receive the authorization response message from the identity authentication server through the electronic identification card application.

Optionally, the local application authorization request further carries a random number and a signature of the random number, where the signature of the random number is obtained by the trusted security platform by performing signature calculation on the random number by using the key of the trusted security platform; and the random number is generated by the trusted security platform, or is sent by the CA to the trusted security platform by using the query command.

Optionally, at least one of the information that can indicate the certificate of the trusted security platform, the random number, and the signature of the random number is information obtained after encryption processing is performed by using the key of the identity authentication server.

It should be understood that the apparatus 800 may be corresponding to the method 500 for applying for an electronic identification card and the terminal device described in the corresponding embodiments. For example, the apparatus 800 may be the terminal device in the method 500 and the corresponding embodiments, or may be a chip configured in the terminal device. In addition, the units in the apparatus 800 are configured to perform the method 500 and the operations and/or processing procedures performed by the terminal device in the corresponding embodiments. To avoid repetition, detailed descriptions thereof are omitted.

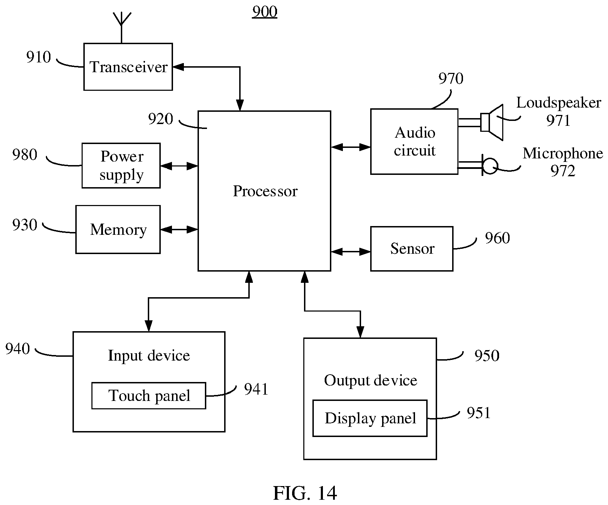

FIG. 14 is a schematic diagram of a structure of a terminal device 900 to which an embodiment of this application is applicable. A person skilled in the art should understand that a structure shown in FIG. 14 shall not constitute any limitation on the terminal device in this application. The terminal device 900 may include more or fewer components than those shown in FIG. 14, a combination of some components, or the like.

A transceiver 910 is configured to establish a communication channel, so that the terminal device is connected to a remote server through the communication channel and downloads media data from the remote server. The transceiver 910 may include communications modules such as a wireless local area network (wireless local area network, wireless LAN) module, a Bluetooth module, a near field communication (near field communication, NFC) module, and a baseband (base band) module, and include radio frequency (radio frequency, RF) circuits corresponding to the communications modules. The radio frequency circuits are configured to perform wireless local area network communication, Bluetooth communication, NFC communication, infrared communication, and/or communication in a cellular communications system. The RF circuit is configured to receive and send signals in an information receiving/sending process or a call process. For example, the RF circuit receives downlink information of a base station and sends the downlink information to a processor 920 for processing, or sends uplink data to the base station. For another example, the RF circuit receives information from an external NFC device and sends the information to the processor 920 for processing, and then sends a processing result to the external NFC device. Generally, the radio frequency circuit includes a known circuit configured to perform these functions, including but not limited to: an antenna system, a radio frequency transceiver, one or more amplifiers, a tuner, one or more oscillators, a digital signal processor, a codec (Codec) chipset, a subscriber identity module (subscriber identification module, SIM) card, and a memory. In addition, the radio frequency circuit may further communicate with a network and another device through wireless communication. The wireless communication may use any communications standard or protocol, including but not limited to a wireless local area network (wireless local area networks, WLAN) global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) system, a future 5th generation (5th generation, 5G) system, a new radio (new radio, NR) system, or the like.

In this embodiment of this application, information, data and/or signaling exchange between the terminal device, an identity authentication server, and a card wallet application server may be implemented by the transceiver 910. For example, the terminal device may send a local upgrade authorization request, a local application authorization request, and the like to the identity authentication server by using the transceiver 910, and may further send upgrade information or application information generated by the processor 920 to the identity authentication server by using the transceiver 910. The terminal device may further receive messages such as a local authorization response and a query success response from the identity authentication server. In addition, the terminal device reads physical identification card information of a user by using an NFC channel, which may alternatively be implemented by the transceiver 910. Details are not described herein again.

The processor 920 is a control center of the terminal device, is connected to all parts of the entire terminal device by using various interfaces and lines, and performs various functions of the terminal device and/or data processing by running or executing a software program and/or a module that are/is stored in the memory and by invoking data stored in the memory. For example, in this embodiment of this application, the processor can generate the upgrade information and the application information, determine whether the terminal device is provided with a trusted security platform, determine whether the trusted security platform stores certification information of the identity authentication server, perform an encryption and/or signing operation on information about the trusted security platform, and the like. The processor may include an integrated circuit (integrated circuit, IC). For example, the processor may include a single encapsulated IC, or may include a plurality of encapsulated ICs that have a same function or different functions. The processor 920 may include only a central processing unit (central processing unit, CPU), or may be a combination of a GPU, a digital signal processor (digital signal processor, DSP), and a control chip (for example, a baseband chip) in the terminal device 900. In this implementation of this application, the CPU may be a single computing core, or may include a plurality of computing cores.

The memory 930 may be configured to store the software program and the module. The processor 920 performs various function applications and data processing of the terminal device 900 by running the software program and the module that are stored in the memory 930. The memory 930 may mainly include a program storage area and a data storage area. The program storage area may store an operating system, an application program (for example, a voice playback function and an image playback function) required by at least one function, and the like. The data storage area may store data (for example, audio data, image data, and a phone book) created based on use of the terminal device 900. In this implementation of this application, the memory 930 may include a volatile memory, for example, a nonvolatile dynamic random access memory (nonvolatile random access memory, NVRAM), a phase change random access memory (phase change RAM, PRAM), or a magnetoresistive random access memory (magetoresistive RAM, MRAM). The memory 930 may further include a nonvolatile memory, for example, at least one magnetic disk storage device, an electrically erasable programmable read-only memory (electrically erasable programmable read-only memory, EEPROM), or a flash memory, for example, a NOR flash memory (NOR flash memory) or a NAND flash memory (NAND flash memory). The nonvolatile memory stores the operating system on which the processor runs and the application program that is executed by the processor. The processor loads a running program and data from the nonvolatile memory to the memory, and stores data content into a large-capacity storage apparatus. The operating system includes various components and/or drivers that are used for control and management of a conventional system task such as memory management, storage device control, and power management, and that are conducive to communication between software and hardware. In this implementation of this application, the operating system may be an Android (Android) system of Google Inc., an iOS system developed by Apple Inc., a Windows operating system developed by Microsoft Corporation, or the like, or may be an embedded operating system such as VxWorks. The application program includes any application installed on the terminal device, including but not limited to a browser, an email, an instant messaging service, word processing, keyboard virtualization, a widget (Widget), encryption, digital copyright management, speech recognition, voice duplication, positioning (for example, a function provided by a Global Positioning System), and music playing. In this embodiment of this application, the terminal device involves data storage, for example, storage of the application program and user data, preconfiguration of certificates of various servers (for example, the card wallet application server and the identity authentication server), and secure storage of a CTID.

An input device 940 may be configured to implement interaction between the user and the terminal device and/or enter information into the terminal device. For example, the input device 940 may receive numeral information or character information entered by the user, to generate a signal input that is related to user setting or function control. In this embodiment of this application, the input device 940 may be a touch panel 941, may be another human-machine interaction interface such as a substantive input key or a microphone, or may be another external information capture device such as a camera (not shown in FIG. 14). The touch panel, also referred to as a touchscreen or a touchscreen, may collect an operation action performed by the user by touching the touch panel or performed near the touch panel, for example, an operation action performed by the user on the touch panel or in a position near the touch panel by using a finger, a stylus, or any other suitable object or accessory, and drive a corresponding connection apparatus according to a preset program. Optionally, the touch panel may include two parts: a touch detection apparatus and a touch controller. The touch detection apparatus detects a touch operation performed by the user, converts the detected touch operation into an electrical signal, and transmits the electrical signal to the touch controller. The touch controller receives the electrical signal from the touch detection apparatus, converts the electrical signal into contact coordinates, and sends the contact coordinates to the processor 920. The touch controller may further receive and execute a command sent by the processor 920. In addition, the touch panel may be implemented in a plurality of types, such as a resistive type, a capacitive type, an infrared (Infrared) type, and a surface acoustic wave type. In another implementation of this application, the substantive input key used by the input device 940 may include but is not limited to one or more of a physical keyboard, a function key (for example, a volume control key or an on/off key), a trackball, a mouse, and a joystick. The input device in a form of a microphone may collect a voice input by the user or from an environment, and convert the voice into a command that is in a form of an electrical signal and that can be executed by the processor 920.

In this embodiment of this application, the terminal device 900 may implement interaction with the user by using the input device 940. For example, the terminal device may receive a trigger instruction by using the touch panel 951, or receive physical identification card information by using the touch panel 951. For another example, a client application CA running in an REE and an electronic identification card application running in a TEE or an SE collect face image information of the user through the CAmera.

An output device 950 may be configured to display information entered by the user, information provided for the user, and various menus of the terminal device 900, and may further receive a user input. The output device 950 includes but is not limited to an image output unit and a sound output unit. The image output unit is configured to output a text, an image, and/or a video. The image output unit may include a display panel. The display panel 951 may be configured in a form of a liquid crystal display (liquid crystal display, LCD), an organic light-emitting diode (organic light-emitting diode, OLED), a field emission display (field emission display, FED), or the like. Alternatively, the image output unit may include a reflective display, for example, an electrophoretic (electrophoretic) display, or a display using a technology of interferometric modulation of light (interferometric modulation of light). The image output unit may include a single display or a plurality of displays of different sizes. In a specific implementation of this application, a touch panel 941 used by the input device 940 may also be used as the display panel 951 of the output device 950. For example, after detecting a gesture operation performed by touching the touch panel or performed near the touch panel, the touch panel transmits information about the gesture operation to the processor 920 to determine a touch event type, and then the processor 920 provides a corresponding visual output on the display panel 951 based on the touch event type. In FIG. 14, although the input device 940 and the output device 950 are used as two separate components to implement input and output functions of the electronic device, in some embodiments, the touch panel 941 and the display panel 951 may be integrated as a whole to implement the input and output functions of the terminal device. For example, the image output unit may display various graphical user interfaces (graphical user interface, GUI for short) as virtual control components, including but not limited to a window, a scrollbar, an icon, and a scrapbook, for the user to perform an operation in a touch manner.

For example, the management screen and the prompt box shown in FIG. 3, FIG. 4, FIG. 5, and/or FIG. 9 in this embodiment of this application may be displayed by the display panel 951 in the output device 950.

There may be one or more types of sensors 960. For example, the sensor 960 may include a light sensor, a motion sensor, and another sensor. Specifically, the light sensor may include an ambient light sensor and a proximity sensor. The ambient light sensor may adjust luminance of the display panel 951 based on brightness of ambient light. The proximity sensor may turn off the display panel 951 and/or backlight when the terminal device 900 moves close to an ear. As one of motion sensors, an acceleration sensor may detect values of acceleration in various directions (usually, there are three axes), may detect, in a static state, a value and a direction of gravity, and may be used for applications that recognize postures (for example, screen switching between a landscape mode and a portrait mode, a related game, and magnetometer posture calibration) of the terminal device, vibration-recognition-related functions (for example, a pedometer and tapping), and the like. Other sensors that can be configured on the terminal device 900 such as a gravity sensor (or may be referred to as a gravity sensor), a gyroscope, a barometer, a hygrometer, a thermometer, and an infrared sensor are not detailed herein. For example, in this embodiment of this application, the input device and the output device may alternatively be implemented by using the sensor. The terminal device may receive the trigger instruction by detecting an operation of the user on the touch panel 941 by using the sensor.

The terminal device 900 may further include an audio circuit 970, and the audio circuit 970 may provide an audio interface between the user and the terminal device 900. The audio circuit 970 may transmit, to a loudspeaker 971, a signal that is converted from received audio data, and the loudspeaker 971 converts the signal into a sound signal and outputs the sound signal. In addition, the microphone 972 converts a collected sound signal into a signal; and the audio circuit 970 receives the signal, converts the signal into audio data, and outputs the audio data to the transceiver 910 so that the audio data is sent to another terminal device, or the audio data is output to the processor 920 for further processing.

In addition, the terminal device 900 further includes a power supply 980 (for example, a battery) that supplies power to all the components. Preferably, the power supply 980 may be logically connected to the processor 920 by using a power management system, so that functions such as charging and discharging management and power consumption management are implemented by using the power management system.

The terminal device 900 shown in FIG. 14 may be configured to implement the method for upgrading a service application scope of an electronic identification card provided in this application, and may also be configured to implement the method for applying for an electronic identification card provided in this application.

For example, in the scenario 1, the terminal device 900 detects a user operation by using the input device 940 (which may be, for example, the touch panel 941), to receive a trigger instruction used to request to upgrade a service application scope of an electronic identification card of a user. The input device 940 sends the received trigger instruction to the processor 920. The processor 920 determines whether the terminal device 900 is provided with a trusted security platform, and when determining that the terminal device 900 is provided with the trusted security platform, determines whether the trusted security platform stores certification information of the identity authentication server, by invoking and running the software program and/or the module that are/is stored in the memory 930. When the trusted security platform stores the certification information of the identity authentication server, the terminal device generates, by using the processor 920, upgrade information required to upgrade the service application scope of the electronic identification card, and sends the upgrade information to the identity authentication server by using the transceiver 910, so that the identity authentication server upgrades the service application scope of the electronic identification card of the user based on the upgrade information.

For another example, in the scenario 2, the terminal device 900 receives, by using the input device 940 (which may be, for example, the touch panel 941), a trigger instruction that is entered by a user and that is used to request to apply for an electronic identification card with a target service application scope for the user. The input device 940 sends the received trigger instruction to the processor 920. The processor 920 determines whether the terminal device 900 is provided with a trusted security platform, and when determining that the terminal device 900 is provided with the trusted security platform, determines whether the trusted security platform stores certification information of the identity authentication server, by invoking and running the software program and/or the module that are/is stored in the memory 930. When the trusted security platform stores the certification information of the identity authentication server, the terminal device generates, by using the processor 920, application information required to apply for the electronic identification card with the target service application scope for the user, and sends the application information to the identity authentication server by using the transceiver 910, so that the identity authentication server generates the electronic identification card with the target service application scope for the user based on the application information.

The terminal device 900 may be corresponding to the terminal device described in the method embodiments, and the components and/or devices of the terminal device 900 are configured to perform the operations and/or processing processes performed by the terminal device in the method embodiments. Herein, to avoid repetition, detailed descriptions thereof are omitted.

It should be understood that the apparatus 700 shown in FIG. 12 may be the terminal device 900 shown in FIG. 14. For example, an input function of the input and output unit 701 may be implemented by the input device 940 in FIG. 14, and an output function of the input and output unit 701 may be implemented by the output device 950 in FIG. 14. The processing unit 702 may be implemented by the processor 920 in FIG. 14. The transceiver unit 703 may be implemented by the transceiver 910 in FIG. 14.

Likewise, the apparatus 800 shown in FIG. 13 may also be the terminal device 900 shown in FIG. 14. For example, an input function of the input and output unit 801 may be implemented by the input device 940 in FIG. 14, and an output function of the input and output unit 801 may be implemented by the output device 950 in FIG. 14. The processing unit 802 may be implemented by the processor 920 in FIG. 14. The transceiver unit 803 may be implemented by the transceiver 910 in FIG. 14.

In addition, the apparatus 700 may alternatively be a chip configured in the terminal device 900. In this case, the input and output unit 701 and the transceiver unit 703 may be an input/output interface or an input/output circuit in the chip. The processing unit 701 may be a processor of the chip. The terminal device 900 can implement functions of the terminal device in the scenario 1 by using the chip, the input device 940, the output device 950, and the transceiver 910. For example, the input device 940 receives a trigger instruction used to request to upgrade a service application scope of an electronic identification card of a user, and inputs the trigger instruction to the processor of the chip through an input interface/input circuit of the chip. After receiving the trigger instruction, the processor of the chip generates upgrade information, and outputs the upgrade information to the transceiver 910 through an output interface/output circuit; and the transceiver 910 sends the upgrade information to the identity authentication server.

Optionally, the processor of the chip may be independent of the processor 920 in the terminal device, or may be implemented by the processor 920 in the terminal device.

Likewise, the apparatus 800 may alternatively be a chip configured in the terminal device 900. In this case, the input and output unit 801 and the transceiver unit 803 may be an input/output interface or an input/output circuit in the chip. The processing unit 801 may be a processor of the chip. The terminal device 900 can implement functions of the terminal device in the scenario 2 by using the chip, the input device 940, the output device 950, and the transceiver 910. For example, the input device 940 receives a trigger instruction used to request to apply for an electronic identification card with a target service application scope, and inputs the trigger instruction to the processor of the chip through an input interface/input circuit of the chip. After receiving the trigger instruction, the processor of the chip generates application information, and outputs the application information to the transceiver 910 through an output interface/output circuit of the chip; and the transceiver 910 sends the application information to the identity authentication server.

Optionally, the processor of the chip may be independent of the processor 920 in the terminal device, or may be implemented by the processor 920 in the terminal device.

In addition, this application provides a computer-readable storage medium. The computer-readable storage medium stores a computer program; and when the computer program is run on a computer, the computer is enabled to perform corresponding operations and/or processing processes performed by the terminal device in the method 100 and any possible implementation of the method 100.

This application provides a computer-readable storage medium. The computer-readable storage medium stores a computer program; and when the computer program is run on a computer, the computer is enabled to perform corresponding operations and/or processing processes performed by the terminal device in the method 500 and any possible implementation of the method 500.

This application provides a chip, including a memory and a processor. The memory is configured to store a computer program, and the processor is configured to invoke the computer program from the memory and run the computer program, so that a terminal device installed with the chip performs corresponding operations and/or processing processes performed by the terminal device in the method 100 and any possible implementation of the method 100.

This application provides a chip, including a memory and a processor. The memory is configured to store a computer program, and the processor is configured to invoke the computer program from the memory and run the computer program, so that a terminal device installed with the chip performs corresponding operations and/or processing processes performed by the terminal device in the method 500 and any possible implementation of the method 500.

This application provides a computer program product. The computer program product includes a computer program; and when the computer program is run on a computer, the computer is enabled to perform corresponding operations and/or processing processes performed by the terminal device in the method 100 and any possible implementation of the method 100.

This application provides a computer program product. The computer program product includes a computer program; and when the computer program is run on a computer, the computer is enabled to perform corresponding operations and/or processing processes performed by the terminal device in the method 500 and any possible implementation of the method 500.

Optionally, the computer program may be completely or partially stored on the storage medium that is encapsulated along with the processor, or may be partially or completely stored on the memory that is not encapsulated along with the processor.

In the foregoing embodiment, the term "and/or" describes an association relationship for describing associated objects and represents that three relationships may exist. For example, A and/or B may represent the following three cases: Only A exists, both A and B exist, and only B exists. A and B each may be in a singular form or a plural form.

In addition, in the foregoing embodiments, "at least one" represents one or more. "A plurality of" may be to two or more.

It may be clearly understood by a person skilled in the art that, for the purpose of convenient and brief description, for a detailed working process of the foregoing apparatus and unit, refer to a corresponding process in the foregoing method embodiments, and details are not described herein again.

It should be understood that, in the embodiments provided in this application, the disclosed apparatus and method may be implemented in other manners. In addition, the apparatus embodiments described above are merely used as examples. For example, division into the units is merely logical function division and may be other division in an actual implementation. For example, a plurality of units or components may be combined or may be integrated into another system, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may be or may not be physically separate. Components shown as units may be or may not be physical units, and may be located in one position, or may be distributed on a plurality of network units. Some or all of the units may be selected according to actual needs to achieve the objectives of the technical solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of this application. Any variation or replacement readily figured out by a person skilled in the art within the technical scope disclosed in this application shall fall within the scope of this application. The protection scope of this application shall be subject to the protection scope of the claims.

## Claims

1. A method for upgrading a service application scope of an electronic identification card, comprising:
receiving, by a terminal device, a trigger instruction, wherein the trigger instruction is used to request to upgrade a service application scope of an electronic identification card of a user;
determining, by the terminal device, that the terminal device is provided with a trusted security platform, and determining that the trusted security platform stores certification information of an identity authentication server;
obtaining, by the terminal device, from the identity authentication server, permission to upgrade the service application scope of the electronic identification card based on the trusted security platform; and
generating, by the terminal device, upgrade information required to upgrade the service application scope of the electronic identification card, and sending the upgrade information to the identity authentication server, so that the identity authentication server upgrades the application scope of the electronic identification card of the user based on the upgrade information.

2. The method according to claim 1, wherein before the determining, by the terminal device, that the trusted security platform stores certification information of an identity authentication server, the method further comprises:
determining, by the terminal device, that the trusted security platform has an electronic identification card application; or
when determining that the trusted security platform has no electronic identification card application, downloading and installing, by the terminal device, an electronic identification card application to the trusted security platform.

3. The method according to claim 2, wherein the trusted security platform is a trusted execution environment TEE, and the electronic identification card application is a trusted application TA in the TEE; or
the trusted security platform is a secure element SE, and the electronic identification card application is a security application in the SE.

4. The method according to any one of claims 1 to 3, wherein the upgrade information comprises face image information and physical identification card information of the user, and
the generating, by the terminal device, upgrade information required to upgrade the service application scope of the electronic identification card, and sending the upgrade information to the identity authentication server comprises:
generating, by the terminal device, the upgrade information through a client application CA in a rich execution environment REE, and sending the upgrade information to the identity authentication server through the CA, wherein at least one piece of the upgrade information is obtained by the CA from the electronic identification card application; or
requesting, by the terminal device through the CA, the electronic identification card application to generate the upgrade information, and sending, by the electronic identification card application, the upgrade information to the identity authentication server.

5. The method according to claim 4, wherein the upgrade information further comprises signature information, and the signature information is information obtained by the electronic identification card application by performing signing processing on at least one of the face image information and the physical identification card information by using a key of the trusted security platform.

6. The method according to claim 4 or 5, wherein the upgrade information further comprises electronic identification card information, or
the upgrade information further comprises the electronic identification card information and identification information of the service application scope corresponding to the electronic identification card information.

7. The method according to any one of claims 4 to 6, wherein the upgrade information is information obtained after encryption processing is performed by using a key of the identity authentication server.

8. The method according to any one of claims 1 to 7, wherein the determining, by the terminal device, that the trusted security platform stores certification information of an identity authentication server comprises:
sending, by the terminal device, a query command to the trusted security platform through the CA in the REE, wherein the query command is used to request to query whether the trusted security platform stores the certification information of the identity authentication server, and the query command carries information that can represent an identity of the identity authentication server; and
receiving, by the terminal device, a query success response from the trusted security platform through the CA, wherein the query success response is used to indicate that the trusted security platform stores the certification information of the identity authentication server.

9. The method according to claim 8, wherein the query success response carries information that can indicate a certificate of the trusted security platform, and
the obtaining, by the terminal device, from the identity authentication server, permission to upgrade the service application scope of the electronic identification card based on the trusted security platform comprises:
sending, by the terminal device, a local upgrade grant request to the identity authentication server, wherein the local upgrade grant request carries the information that can indicate the certificate of the trusted security platform; and
receiving, by the terminal device, a grant response message returned by the identity authentication server, wherein the grant response message is used to indicate that the identity authentication server allows upgrading the service application scope of the electronic identification card based on the trusted security platform.

10. The method according to claim 9, wherein the sending, by the terminal device, a local upgrade grant request to the identity authentication server comprises:
sending, by the terminal device, the local upgrade grant request to the identity authentication server through the CA, and
the receiving, by the terminal device, a grant response message returned by the identity authentication server comprises:
receiving, by the terminal device through the CA, the grant response message returned by the identity authentication server;
or
the sending, by the terminal device, a local upgrade grant request to the identity authentication server comprises:
sending, by the terminal device, the local upgrade grant request to the identity authentication server through the electronic identification card application, and
the receiving, by the terminal device, a grant response message returned by the identity authentication server comprises:
receiving, by the terminal device, the grant response message from the identity authentication server through the electronic identification card application.

11. The method according to claim 9 or 10, wherein the local upgrade grant request further carries a random number and a signature of the random number, wherein the signature of the random number is obtained by the trusted security platform by performing signature calculation on the random number by using the key of the trusted security platform; and the random number is generated by the trusted security platform, or is sent by the CA to the trusted security platform by using the query command.

12. The method according to any one of claims 9 to 11, wherein at least one of the information that can indicate the certificate of the trusted security platform, the random number, and the signature of the random number is information obtained after encryption processing is performed by using the key of the identity authentication server.

13. A method for applying for an electronic identification card, comprising:
receiving, by a terminal device, a trigger instruction, wherein the trigger instruction is used to request to apply for an electronic identification card with a target service application scope for a user, and the service application scope is used to specify a service to which the electronic identification card can be applicable;
determining, by the terminal device, that the terminal device is provided with a trusted security platform, and determining that the trusted security platform stores certification information of an identity authentication server;
obtaining, by the terminal device, from the identity authentication server, permission to apply for the electronic identification card with the target service application scope for the user based on the trusted security platform; and
generating, by the terminal device, application information required to apply for the electronic identification card with the target service application scope, and sending the application information to the identity authentication server, so that the identity authentication server generates the electronic identification card with the target service application scope for the user based on the application information.

14. The method according to claim 13, wherein before the determining, by the terminal device, that the trusted security platform stores certification information of an identity authentication server, the method further comprises:
determining, by the terminal device, that the trusted security platform has an electronic identification card application; or
when determining that the trusted security platform has no electronic identification card application, downloading and installing, by the terminal device, an electronic identification card application to the trusted security platform.

15. The method according to claim 14, wherein the trusted security platform is a trusted execution environment TEE, and the electronic identification card application is a trusted application TA in the TEE; or
the trusted security platform is a secure element SE, and the electronic identification card application is a security application in the SE.

16. The method according to any one of claims 13 to 15, wherein the application information comprises face image information and physical identification card information of the user, and
the generating, by the terminal device, application information required to apply for the electronic identification card with the target service application scope, and sending the application information to the identity authentication server comprises:
generating, by the terminal device, the application information through a client application CA in a rich execution environment REE, and sending the application information to the identity authentication server through the CA, wherein at least one piece of the application information is obtained by the CA from the electronic identification card application; or
requesting, by the terminal device through the CA, the electronic identification card application to generate the application information, and sending, by the electronic identification card application, the application information to the identity authentication server.

17. The method according to claim 16, wherein the application information further comprises signature information, and the signature information is information obtained by the electronic identification card application by performing signing processing on at least one of the face image information and the physical identification card information by using a key of the trusted security platform.

18. The method according to claim 16 or 17, wherein the application information further comprises identification information of the target service application scope.

19. The method according to any one of claims 16 to 18, wherein the application information is information obtained after encryption processing is performed by using a key of the identity authentication server.

20. The method according to any one of claims 13 to 19, wherein the determining, by the terminal device, that the trusted security platform stores certification information of an identity authentication server comprises:
sending, by the terminal device, a query command to the trusted security platform through the CA in the REE, wherein the query command is used to request to query whether the trusted security platform stores the certification information of the identity authentication server, and the query command carries information that can represent an identity of the identity authentication server; and
receiving, by the terminal device, a query success response from the trusted security platform through the CA, wherein the query success response is used to indicate that the trusted security platform stores the certification information of the identity authentication server.

21. The method according to claim 20, wherein the query success response carries information that can indicate a certificate of the trusted security platform, and
the obtaining, by the terminal device, from the identity authentication server, permission to apply for the electronic identification card with the target service for the user based on the trusted security platform comprises:
sending, by the terminal device, a local application grant request to the identity authentication server, wherein the local application grant request carries the information that can indicate the certificate of the trusted security platform; and
receiving, by the terminal device, a grant response message returned by the identity authentication server, wherein the grant response message is used to indicate that the identity authentication server allows applying for the electronic identification card with the target service application scope for the user based on the trusted security platform.

22. The method according to claim 21, wherein the sending, by the terminal device, a local application grant request to the identity authentication server comprises:
sending, by the terminal device, the local application grant request to the identity authentication server through the CA, and
the receiving, by the terminal device, a grant response message returned by the identity authentication server comprises:
receiving, by the terminal device through the CA, the grant response message returned by the identity authentication server;
or
the sending, by the terminal device, a local application grant request to the identity authentication server comprises:
sending, by the terminal device, the local application grant request to the identity authentication server through the electronic identification card application, and
the receiving, by the terminal device, a grant response message returned by the identity authentication server comprises:
receiving, by the terminal device, the grant response message from the identity authentication server through the electronic identification card application.

23. The method according to claim 21 or 22, wherein the local application grant request further carries a random number and a signature of the random number, wherein the signature of the random number is obtained by the trusted security platform by performing signature calculation on the random number by using the key of the trusted security platform; and the random number is generated by the trusted security platform, or is sent by the CA to the trusted security platform by using the query command.

24. The method according to any one of claims 21 to 23, wherein at least one of the information that can indicate the certificate of the trusted security platform, the random number, and the signature of the random number is information obtained after encryption processing is performed by using the key of the identity authentication server.

25. A terminal device, comprising:
an input/output device, configured to receive a trigger instruction, wherein the trigger instruction is used to request to upgrade a service application scope of an electronic identification card of a user;
a processor, configured to: when the input/output device receives the trigger instruction, determine that the terminal device is provided with a trusted security platform, and determine that the trusted security platform stores certification information of an identity authentication server, wherein
the processor is further configured to: when determining that the trusted security platform stores the certification information of the identity authentication server, obtain, from the identity authentication server, permission to upgrade the service application scope of the electronic identification card based on the trusted security platform, and
the processor is further configured to generate upgrade information required to upgrade the service application scope of the electronic identification card; and
a transceiver, configured to send the upgrade information generated by the processor to the identity authentication server, so that the identity authentication server upgrades the service application scope of the electronic identification card based on the upgrade information.

26. A terminal device, comprising:
an input/output device, configured to receive a trigger instruction, wherein the trigger instruction is used to request to apply for an electronic identification card with a target service application scope for a user, and the service application scope is used to specify a service to which the electronic identification card can be applicable;
a processor, configured to: when the input/output device receives the trigger instruction, determine that the terminal device is provided with a trusted security platform, and determine that the trusted security platform stores certification information of an identity authentication server, wherein
the processor is further configured to obtain, from the identity authentication server, permission to apply for the electronic identification card with the target service application scope for the user based on the trusted security platform, and
the processor is further configured to generate application information required to apply for the electronic identification card with the target service application scope; and
a transceiver, configured to send the application information to the identity authentication server, so that the identity authentication server generates the electronic identification card with the target service application scope for the user based on the application information.
